(19) Europäisches Patentamt / European Patent Office / Office européen des brevets

(11) **EP 4 303 794 A1**

(12) **EUROPEAN PATENT APPLICATION**

(43) Date of publication:
**10.01.2024 Bulletin 2024/02**

(21) Application number: **22306030.2**

(22) Date of filing: **08.07.2022**

(51) International Patent Classification (IPC):
**G06Q 10/08** (2023.01)    **B64F 1/36** (2017.01)

(52) Cooperative Patent Classification (CPC):
**B64F 1/366; B64F 1/368;** G06Q 10/0833

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Amadeus S.A.S.**
**06410 Biot (FR)**

(72) Inventor: **GOVINDAN, Nandagopal**
**560036 Bengaluru (IN)**

(74) Representative: **Samson & Partner Patentanwälte mbB**
**Widenmayerstraße 6**
**80538 München (DE)**

(54) **METHOD OF BAGGAGE IDENTIFICATION AND BAGGAGE RECONCILIATION FOR PUBLIC TRANSPORT**

(57)    A baggage identification/baggage reconciliation method for public transport is provided. The method involves passenger identification and capturing parameters of piece(s) of baggage at check-in to form a virtual baggage identity, including capturing multiple images of the piece of baggage and generating a check-in 3D point cloud to the piece of baggage therefrom, which involves extracting corner point positions of the piece(s) of baggage. The virtual baggage identity is mapped to the passenger/transport details. The method includes identifying the passenger at the check-out and identifying the piece(s) of baggage at the check-out using the virtual baggage identity, said identification including capturing image(s) of the piece(s) of baggage at the check-out and generating a check-out 3D point cloud/point pattern from said captured image(s) and comparing check-in 3D point clouds with check-out 3D point cloud/point pattern and delivering the identified piece of baggage to the identified passenger.

Fig. 1A

EP 4 303 794 A1

**Description**

**FIELD OF THE INVENTION**

The present invention generally is related to a method of baggage identification and baggage reconciliation for public transport.

The webpage https://www.wearefinn.com/topics/posts/sats speeds up ramp handling with ar technology/ pertains to an ergonomically designed smart glass to provide ramp handling staff with critical information such as loading instructions in real-time. Using the wearable AR (augmented reality) technology, operators will be able to scan visual markers found on baggage and cargo containers that provide details such as weight, unit number, loading sequence and the allocated position within the aircraft.

**SUMMARY OF THE INVENTION**

According to first aspect, a method of baggage identification and baggage reconciliation for public transport, wherein a piece of baggage is associated with a passenger, is provided. The method comprises identifying a passenger to be transported and passenger transport details and capturing parameters of at least one piece of baggage at a check-in. The parameters form a virtual baggage identity, wherein capturing said parameters comprises capturing multiple images of the piece of baggage from multiple altitudes and angles and generating a check-in 3D point cloud corresponding to the piece of baggage on the basis of the multiple images captured and wherein generating said check-in 3D point cloud comprises extracting the position of corner points of the piece of baggage. The method of baggage identification and baggage reconciliation further comprises mapping the virtual baggage identity to the identified passenger and passenger transport details. The method further comprises identifying the passenger at the check-out destination, identifying the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing check-in 3D point clouds with the check-out 3D point cloud or point pattern and delivering the piece of baggage identified at the check-out to the passenger identified at the check-out.

According to a second aspect, a computerized system of baggage identification and baggage reconciliation for public transport wherein a piece of baggage is associated with a passenger, is provided. The distributed computer system comprises at least one server, the at least one server comprises at least one processor and at least one non-volatile memory, wherein the computerized system is arranged to identify a passenger to be transported and passenger transport details and capture parameters of at least one piece of baggage at a check-in, wherein the parameters form a virtual baggage identity. Capturing said parameters comprises capturing multiple images of the piece of baggage from multiple altitudes and angles and generating a check-in 3D point cloud corresponding to the piece of baggage on the basis of the multiple images captured, wherein generating said check-in 3D point cloud comprises extracting the position of corner points of the piece of baggage. The computerized system is further arranged to map the virtual baggage identity to the identified passenger and passenger transport details and to identify the passenger at the check-out destination and to identify the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing check-in 3D point clouds with the check-out 3D point cloud or point pattern, and deliver the piece of baggage identified at the check-out to the passenger identified at the check-out.

According to a third aspect, a computer program product is provided comprising program code instructions stored on a computer readable medium to execute the method steps according to the first aspect.

**GENERAL DESCRIPTION, ALSO OF SUPPLEMENTARY EXAMPLES**

According to first aspect, a method of baggage identification and baggage reconciliation for public transport, wherein a piece of baggage is associated with a passenger, is provided. The piece of baggage may be a suitcase, a handbag etc. One goal of the baggage identification and baggage reconciliation method is to reduce the number of misplaced baggage, due to mistakes in processing baggage at the check-in or check-out. The method can be applied, for example, for the public transport type "flight", but can however, be applied also to ship-transport, bus transport or rail transport.

In previous baggage identification/ baggage reconciliation solutions, the boarding pass has been scanned, the passenger's passport has been scanned, sometimes, along with biometrics of the passengers. Subsequently, the baggage has been scanned and the passenger had to agree that no harmful content was present in the baggage. The weight and size of a baggage has been captured and a convey-ability check has been confirmed. The piece of baggage has been equipped with a bagtag, from which travel related information (passenger and flight associated with the passenger etc.) can be read out using a handheld scanner. The tag has been activated shortly before the baggage check-in was accepted and (optionally) a receipt for the passenger was printed.

The baggage identification/baggage reconciliation system according to the present disclosure differs from that mainly in that the method works without using tags or specific tag scanners.

The method comprises identifying a passenger to be transported and passenger transport details. The passenger is, for example, identified via a his/her passport, a biometric scan (face recognition, fingerprints). The passenger transport details, may include besides the booked flight/train number, scheduled departure/arrival times and a seat number. They may also include insurance details and a credit card number.

The method comprises capturing parameters of at least one piece of baggage at a check-in, wherein the parameters form a virtual baggage identity. The virtual baggage identity, for example, replaces the former used bagtags former used to identify the piece of baggage associated with the passenger in baggage reconciliation. The parameters further described below, may be captured for each piece of baggage handled at the check.in.

A virtual baggage identity including said parameters may be created for every piece of check-in baggage, for example, handled at an airport. Like the bag-tag, the virtual baggage identity sticks with the piece of baggage after its creation at the check-in until the bag-pick up unit at the check-out and can be read out any time during transport. This enables a contactless baggage handling at check-in, transit and check-out.

Capturing said parameters comprises capturing multiple images of the piece of baggage from multiple altitudes and angles and generating a check-in 3D point cloud corresponding to the piece of baggage on the basis of the multiple images captured. This way, a check-in 3D point cloud is, for example, generated for each piece of baggage handled at the check-in. Generating said check-in 3D point cloud comprises extracting the position of corner points of the piece of baggage.

Thus, multiple images of a piece of baggage are captured, for example, from the top, base, front back and from the sides. The pictures may be captured by placing the piece of baggage in the field of view of multiple cameras fixedly mounted at different altitudes and angles around the piece of baggage. Alternatively, cameras fixedly mounted at different altitudes may be rotated around the piece of baggage. In any case, the position of the cameras and the position of the piece of baggage are known when capturing the images.

A pre-requisite for the capturing the images is, for example, camera calibration: A low-resolution camera may be used, such that the size of each image is minimum (less than 500KB). If a high-resolution camera is used, a need may occur to reduce the resolution of the image. The camera calibration is, for example, calculated using chess board images to obtain a camera matrix, a translation matrix, a rotation matrix and scaling factor.

Subsequent to capturing the images, a corner detection algorithm is applied to the captured images to identify corner points of the piece of baggage to form said check-in 3D point cloud. The image capturing and 3D point cloud generating process may be performed at the check-in counter.

The corner detection algorithm used is, for example, the SUSAN (*smallest univalue segment assimilating nucleus*) algorithm. This algorithm may perform the following activities at each image pixel:

1. Place a circular mask around the pixel (nucleus).
2. Calculate the number of pixels within the circular mask which have similar brightness to the nucleus. (These pixels define the USAN - *univalue segment assimilating nucleus.*)
3. Subtract the USAN size from the geometric threshold (which is set lower than when finding edges) to produce a corner strength image.
4. Test for false positives by finding the USAN's centroid and its contiguity.
5. Use non-maximum suppression to find corners.

An example for a mathematical implementation of such a SUSAN algorithm can, for example be found at: https://users.fmrib.ox.ac.uk/~steve/susan/susan/node6.html. An effect provided by usage of a SUSAN corner detection algorithm is that the detection accuracy is higher than for quicker algorithms as, for example, the Harris Corner detection algorithm. However, also the Harris corner detection algorithm may be used if a quick result is desired.

Once the corner points are extracted from the multiple captured images, these points are used to form a check-in 3D point cloud, for example, by the following activities:

1) For each image:

- Get the corners points (pixels) using the SUSAN algorithm (see above). The (x, y) coordinates of the corner points are obtained this way, but not the corresponding z coordinate of the corner points.

For each of the corner points:

- extract the z coordinate from the image. This may be achieved using photogrammetric methods, such as triangulation. This is possible, since the position of the piece of baggage in the field of view of the camera when the picture is taken is known.

Now with x, y and z corner point coordinates a point cloud of corners for the given image is obtained. The process is repeated for multiple images and the point clouds of corners for individual images are stored, for example, in separate files for each image like the example files *File 1*/*File 2* presented below:

*File 1:*

```
3.1798 5.0338 5.6575
3.2396 5.0338 5.6575
3.2727 5.0359 5.6925
3.1071 4.9987 5.5525
3.0627 4.9987 5.5772
3.1327 5.0207 5.5875
```

*File 2:*

```
3.3077 5.4956 6.2422
3.3673 5.4988 6.2402
3.4015 5.5020 6.2741
3.2333 5.4586 6.1391
3.1898 5.4558 6.1653
```

2) The (corner) point clouds obtained as such from multiple images are combined to get the check-in 3D point cloud. The process is repeated to merge all point clouds of all images into one.

The merging of the point clouds can be achieved, for example, using the Iterative closest point (ICP) algorithm.

A short explanation of an example of an ICP algorithm that may be used is given below:

- One point cloud (vertex cloud), the reference, or target, is kept fixed, while the other one, the source, is transformed to best match the reference,
- the transformation is iteratively reversed, involving a combination of translation and rotation,
- the distance from the source to the reference point cloud is calculated, considered as the sum of squared differences between the coordinates of the matched pairs;
- Inputs: reference and source point clouds, initial estimation of the transformation to align the source to the reference (optional), criteria for stopping the iterations.
- Output: refined transformation.

The input of the algorithm is the (corner) point clouds as obtained above, the output of the algorithm is a 3D point cloud being determined by these merged point clouds. Using the ICP algorithm has the effect of a comparable high convergence speed and a good final point cloud alignment, under the assumption that both point clouds are differently sampled.

The following steps may be performed in detail to merge the (corner) point clouds (in this example: two corner points clouds):

Choose one of the of the (corner) point clouds as a point cloud fixed in space for the merge.

Find the transformation matrix to rotate and translate the other movable point clouds to merge. This means finding a rigid-body transformation (rotation + translation) for the movable point cloud. The final transformation is given, for example, as homogeneous transformation matrix H:

$$H = \begin{pmatrix} R(0,0) & R(0,1) & R(0,2) & tx \\ R(1,0) & R(1,1) & R(1,2) & ty \\ R(2,0) & R(2,1) & R(2,2) & tz \\ 0 & 0 & 0 & 1 \end{pmatrix},$$

where R(0,0)... R(2,2) are elements of the rotation matrix (around the x, y or z axis) and tx, ty, and tz are the components of the translation vector.

Using the matrix H, the movable point cloud (in the case of two point clouds) is transformed with:

$$X\_t = H*X,$$

where X is a 4-by-n matrix holding in each column the homogeneous coordinates x, y, z, 1 of a single extracted corner point, and X_t is the resulting 4-by-n matrix with the transformed points. Each moveable point cloud extracted from a single image may correspond to a different matrix X. To merge N point clouds, a matrix X for each point cloud to merge may be formed and transformed by the above equation.

The fixed 3D point cloud and the such transformed 3D point cloud X_t are aligned with each other and now form together the check-in 3D point cloud.

As mentioned above, the check-in 3D point cloud is used as a part of the virtual baggage identity. Other parameters of the piece of baggage may be part of this baggage identity, as will be described below.

If the creation of the check-in 3D point cloud is not successful, multiple images of the piece of baggage may be captured again, as described above and the 3D point cloud creation activities described above may be repeated on the new captured images.

The method further comprises mapping the virtual baggage identity to the identified passenger and passenger transport details. This mapping may be stored in a centralized data structure accessible at the check-in, the check-out and also during transit.

A boarding pass is created and a link to the passenger, baggage(s) and flight may be formed.

The passenger and the piece of baggage are transported separately from the check-in (departure) destination to the check-out (arrival) destination.

When the passenger and the piece of baggage have arrived at the check-out destination, the passenger is identified at the check-out destination. The passenger identification at the check-out destination may be identical to the passenger identification at the check-in destination (see above).

The method comprises identifying the at least one piece of baggage that is associated with the passenger at the check-out destination on the basis of the virtual baggage identity. This identification comprises capturing at least one image of the at least one piece of baggage at the check-out and generating a check-out 3D point cloud or point pattern from said captured at least one image and comparing check-in 3D point clouds (each generated based on images captured of several pieces of a different piece of baggage that was checked-in) with the check-out 3D point cloud or point pattern.

The term point pattern shall indicate here that for the comparison, a check-out 3D point cloud with the same density of data points as the check-in 3D point cloud may not be required. Rather a point pattern being a point cloud constructed from fewer input images taken at the check-out destination than originally taken at the check-in destination (e.g. pictures from the front side of a piece of baggage from three to four different angles and altitudes) yielding a lower density of data points may suffice for successfully identifying that a given piece of baggage arriving at the check-out corresponds to a particular piece of baggage with a corresponding particular check-in 3D point cloud.

A comparison of corner points extracted from a single picture recorded at the check-out (corresponding to said point pattern captured at the check-out) with a plurality of different check-in 3D point clouds may suffice. For this purpose, a picture providing a point cloud with a maximum of (corner) points or a relatively high number of (corner) points, like a frontal image of a piece of baggage, may be selected. However, if, for example, a high-resolution image is recorded, a point cloud may also be extracted from a single picture and may be compared to check-in point clouds in the course of this comparison.

However, at the check-out also a check-out 3D point cloud involving as many data points (coordinates) as the check-in 3D point cloud may be created by scanning by capturing pictures of the piece of baggage at the checkout in the same manner as in the check-in.

In the following, the comparison of (check-in) 3D point clouds from multiple bags with a check-out 3D point cloud or point pattern obtained from picture(s) of a piece of baggage taken at the check-out is described:
Get at least one new image of the bag at the check-out.

If the number of (corner) points extracted is minimal or not sufficiently high in the new image, reject it and try another image from which more (corner) points can be extracted. If needed, multiple images can be taken and used for the creation of a check-out 3D point cloud.

Get the check-out point cloud from the new image(s) using SUSAN and ICP as mentioned above.

Compare the new point cloud with the check-in 3D point clouds available for multiple pieces of baggage.

For each check-in 3D point cloud, compare the point clouds, let A be a check-in point cloud and B the new check-out point cloud (with outliers excluded).

Choose A as input cloud.

For each point in point cloud B:

Find the nearest point in cloud A and compare (tree search may be used for quick results) and thereby find the squared distance between two points. If the distance between two points is within a point-distance threshold, continue. Add the squared distance between two points and accumulate the distances between each point in point cloud B and the respective nearest point in point cloud A.

If the mean accumulated distance

$$mean\ accumulated\ distance = \frac{accumulated\ distance}{number\ of\ points\ compared - number\ of\ outliers}$$

exceeds a given threshold, skip to the next A point cloud, since this point cloud A cannot be counted as a match for point cloud B.

If said mean accumulated distance between two 3D point clouds A and B is minimum among all the check-in 3D point clouds, then A and B are a close match and the piece of baggage for which check-out 3D point cloud B was generated is identified as the piece of baggage with check-in 3D point cloud A in its virtual baggage identity.

A matching percentage between the point clouds A and B may be calculated from the accumulated distance between the point clouds A and B. If there is a point cloud A that (i) not exceeds the given mean accumulated distance threshold and/or (ii) is the only point cloud with a given matching percentage in a range between a given matching percentage threshold like 90% +/- 10% the piece of baggage associated with this point cloud B is identified as the piece of baggage associated to the passenger at the check-out as such is then delivered to the passenger identified at the check-out.

If, however, there is more than one point cloud A within the range around the matching percentage threshold, other parameters, such as the weight of the pieces of baggage associated with the similar point clouds A, their material type, their colour, their X-ray image(s) or the like, are considered.

In prior art, currently pieces of baggage are delivered in conveyor belt and passenger pick their respective piece(s) of baggage. With this solution comes a high probability to pick the wrong baggage or a high probability of baggage loss or baggage theft.

Therefore, according to the present disclosure, no conveyor belt baggage pick-up unit may be used, but bag pick-up unit. The boarding pass of the passenger may be scanned and a biometrics scan may confirm the identity of the passage. It may be checked then, whether a piece of baggage associated with the passenger via its virtual baggage identity is ready to deliver (if there are multiple bags, they may be grouped together to deliver them together).

The piece(s) of baggage may be sorted in the order of the seat numbers at the bag pick-up unit. Once a passenger shows his/her boarding pass to the camera, the camera may detect the seat number from the boarding pass and a signal to a baggage delivery unit is sent to deliver the piece of baggage with a baggage identity associated to this seat number to the baggage pick-up unit where the boarding pass of said passenger was scanned. Should the seating number have been interchanged, this may be noted by the system and instead the passport number, biometric identification etc. is read out at the check-out and the piece(s) of baggage is/are delivered to the passenger identified as such.

The required Edifact Messages to handle a piece of baggage along with a virtual baggage identity according to the method of baggage identification and baggage reconciliation described herein are, for example:

• Passenger information: PARVRQ -Request Query, PARVRR- Response, PNRENR - to publish a PNR;

• Flight information: FFLIPQ - Request for Flight Information, FFLIPR - Returns Flight Information for a list flights;

• Baggage information: BABGUQ - Updates or creates the acceptance details of bags, BABGUR - Response to the query to update or create the acceptance details of baggage;

• Insurance Information: IBOKCQ- Used to create a booking for a specified product provided by an insurance company, IBOKCR- response upon a booking attempt if successful a confirmation number will be returned;

In some examples, at the check-out, upon verifying the identity of the passenger requesting to pick up the at least one piece of baggage associated with the passenger, the at least one piece of baggage associated with the passenger is transported automatically to a baggage pick-up unit which no other passengers than the passenger associated with the piece of baggage can access. This dedicated baggage pick-up system may be realized by baggage pick-up stations which initiate a transport of the identified associated piece of baggage to the pick-up station, once the passenger at the station has been identified and doors of such a pick-up station may only open when the piece of baggage has already arrived there. These baggage pick-up units may thus be stations to which only one passenger has access at a time so that rolling pieces of baggage on belts is avoided.

In some examples, capturing the parameters at the check-in comprises an X-ray scan of the piece of baggage and wherein the virtual baggage identity comprises also an X-ray scan result of the piece of baggage and wherein capturing the parameters at the check-in further comprises measuring the weight of the piece of baggage associated with the passenger, and wherein the measured weight of the piece baggage and/or the X-ray scan of the piece of baggage is used to differentiate between (similar) pieces of baggage of the same manufacturing line/type, when identifying the piece of baggage at the check-out destination.

The X-ray scan of the piece of baggage is, for example, used for the virtual baggage identity is for example done simultaneously with the X-ray scan that is anyway mandatory on an airport to investigate the piece of baggage for non-transportable goods such as explosives etc. For example, one or more X-ray image obtained from this scan are stored at the check-in and added to the virtual baggage identity. For pieces of baggage that are made of metal and might be X-ray protected, exceptions may be added so that these piece(s) of baggage are not transported.

The X-ray scan image(s) captured at the check-in and also at the check-out may be used to differentiate between a piece(s) of baggage which cannot be differentiated unambiguously based on a comparison of check-in 3D point clouds and check-out 3D point clouds. This may be the case if more than one piece of baggage of the same manufacturing line with a similar look/shape are transported on the same flight. The X-ray images resolve this problem, since also the content of the pieces of baggage to be compared is visible on the X-ray images.

As some transport goods within a piece of baggage may have been displaced during transport, a similarity threshold may be employed when comparing X-ray images from check-in and check-out.

Furthermore, at the check-in, also the weight of the piece of baggage may be measured and may be added to the virtual baggage identity. The weight of each baggage may be measured again at the check-out and used to differentiate between said pieces of baggage that cannot be differentiated based on a 3D point cloud comparison alone.

In some examples, capturing the parameters at the check-in comprises determining relative and absolute dimensions of the at least one piece of baggage, including height, length and depth of the piece of baggage, using photogrammetry.

The dimension, like height, length and depth are obtained, for example, on the basis of the same pictures that are used to generate the check-in 3D point cloud. Hence, the dimensions of the piece of baggage and the 3D check-in point cloud may be determined substantially at the same time. The 3D point cloud may be determined with cameras at a kiosk and/or at a bag drop device.

The dimensions may be extracted from those multiple images, where the position of the piece of baggage in the field of view of the cameras is known, by edge detection algorithms like the SUSAN edge detector, in which boundary lines of an object between corners are identified as edges. The lengths of these edges may then be calculated using the absolute corner coordinates that were obtained.

As mentioned above, although the (x,y) corner coordinates may be extracted from the captured images directly, for determining the z coordinate of the respective corner point, photogrammetric methods, such as triangulation may be used.

Alternatively, the width, height and depth dimensions of a piece of baggage are, for example, determined directly using photogrammetric methods, such as triangulation, for determining the corner point coordinates directly, without using the corner point coordinates already obtained for the check-in 3D point cloud generation.

The width, height and depth dimensions may be recorded at the check-out as well, so that these parameters are also used for baggage identification/reconciliation, should a point cloud comparison not be able to produce an unambiguous match for a given piece of baggage.

Summarized, the parameters included in the virtual baggage identity may include at least a check-in 3D point cloud, a weight of the piece of baggage and the width, height and depth dimensions of the piece of baggage, as well as X-ray scan images of the piece of baggage.

In some examples, a camera and/or an augmented reality device of a baggage reconciliation system captures at least one image of at least the front side of the piece of baggage and the corner points extracted from said at least one image are compared with the check-in 3D point cloud to identify the piece of baggage and associate it to the passenger.

In some examples, the identified piece of baggage is automatically loaded into the correct container associated with the passenger's transport details. The identified baggage is, for example, associated with a certain flight number/seat number by its virtual baggage identity and is transported towards containers that are destined for the plane associated with the flight number.

Once the absolute and relative dimensions of a piece of baggage (height, width, depth) are obtained, a frontal image of the piece of baggage may be tagged with the check-in 3D point cloud of the piece of baggage as a marker in transport sorting and loading the container(s).

In some examples, the dimensions of the at least one piece of baggage obtained are used to plan the arrangement of the piece of baggage in a transport-container, wherein a 3D model of the transport-container is generated and used in either choosing the transport-container based on the dimensions of the piece of baggage or choosing the baggage to be put into the transport-container based on the dimensions of the baggage.

In some examples, a rotatable 3D point cloud corresponding to the piece of baggage is used in order to find a position of the piece of baggage that fits in the 3D model of container, when planning the arrangement of the piece of baggage in the transport-container.

The rotatable 3D point cloud may be the check-in 3D point cloud generated for the piece of baggage at the check-in. Alternatively, a 3D model of the piece of baggage calculated on the basis of the check-in 3D point cloud may be used.

A plurality of 3D point clouds/3D models corresponding to pieces of baggage to be loaded into different containers may be transferred to a container management planning system. The piece of baggage to be loaded into a particular container can therefore be chosen based on the dimensions of the container in this planning system.

If a piece of baggage is declared to be fragile according to the baggage identity associated with it, a suitable container may be chosen correspondingly. Likewise, the material of the piece of baggage may be considered when arranging it in the container.

When the rotatable 3D point cloud/3D model of the piece(s) of baggage is not fitting the 3D model of the container, the piece(s) of baggage is/are rotated to optimally fit in the container in (in a way that as many pieces of baggage as possible fit into a given container, without increasing the risk of baggage damage) in said planning system.

The weight of the pieces of baggage, determined at the check-in, for example, is considered such that the overall weight of each container to be transported is within its threshold limit.

In some examples, the measured weight of the piece of baggage is used in uniformly distributing the weight of pieces of baggage among all transport-containers in order to improve flight stability.

The arrangement of pieces of baggage planned as such is sent to a ground handler to arrange the pieces of baggage in the respective given containers.

In some examples, a portable augmented reality device is provided for a ground handler, wherein the portable augmented reality device determines the identity of the piece of baggage by capturing at least one image of the at least one piece of baggage and comparing corner points extracted from said image(s) with the check-in 3D point cloud. Parameters of the at least one piece of baggage at least in part corresponding to the virtual baggage identity may be displayed on the screen of the portable augmented reality device, when the at least one piece of baggage is in the field of view of the portable augmented reality device.

In some examples, the parameters displayed on the portable augmented reality device comprise at least one of: source and destination of the piece of baggage and the associated passenger to be transported, the baggage type, the transport-container to place the piece of baggage, the position of the piece of baggage in the transport-container, instructions to handle the piece of baggage, the seat number of the passenger associated with the piece of baggage, the weight of the piece of baggage, the height, width and depth dimensions of the of the piece of baggage.

Thus, ground handler staff may recognize a particular piece of baggage as being associated with a particular passenger/seat number/flight since the baggage identity can be identified by the augmented reality device, such as augmented realty glasses. The calculations necessary to perform the comparison of a plurality of check-in 3D point clouds with a point pattern or point cloud extracted from an image of the piece of baggage captured via the augmented reality device may be performed by centralized server(s) of the baggage reconciliation system and the augmented reality device may receive the baggage identity of the piece of baggage currently focused along with the displayed parameters via the network from these server(s).

The parameters displayed on said augmented reality device may further include a 3D model of baggage, which may be generated based on the check-in 3D point cloud, a baggage identification number/code and container identification number/code, the baggage material type identified at the check-in, information about whether the piece of baggage has odd dimensions, the container ID of a container to place the baggage, the position to place the baggage in container, further images of the piece of baggage etc.

Ground handler staff may wear augmented reality glasses, as the pieces of baggage are viewed from spectacles, the above-mentioned parameters of baggage may be displayed in the glasses. Due to the identification of the piece of baggage via the glasses, the ground handler can identify the piece of baggage without tags. If the piece of baggage is (visibly) damaged in transit, ground-handler may record the damage through the glasses.

For the baggage reconciliation system (BRS) also involving the baggage transport, sorting and loading the containers), to identify the pieces of baggage as being associated to a particular passenger barcode scanners are not required, instead cameras and/or augmented glasses may be used: a Camera in the BRS system may capture an image of the piece of baggage, and the 3D point cloud/point pattern generated from the image is compared with the markers of the baggage, represented by the check-in 3D point cloud, by a system to which the camera/augmented reality device is connected. If the piece of baggage cannot be successfully identified using said picture, a notification is sent to change the position of the baggage to capture the frontal image of the baggage. Once the piece of baggage is identified by the camera/augmented reality devices by the baggage reconciliation system, pieces of baggage are transported sorted and loaded accordingly (for example: they are loaded, transported and unloaded in the order of the seat numbers).

In some examples, the ground handler shares the transport progress of the at least one piece of baggage identified and the passenger associated with the piece of baggage is notified about the shared transport progress.

The passenger gets notified on the status of his/her piece(s) of baggage, for example, at each transit stage. If one or more pieces of baggage are damaged in transit, this may also be notified to the passenger immediately. A blockchain concept may be used in this regard, with each piece of baggage being unique in this concept.

In some examples, a damage of the piece of baggage is recorded by cameras that identify the baggage, and wherein the check-in 3D point cloud is compared with a 3D point cloud or point pattern extracted from images taken by said cameras to obtain the difference between the undamaged and the damaged at least one piece of baggage in order to estimate a severity of the recorded damage.

The severity of a recorded damage may be determined, for example, at the check-out, by comparing the check-in 3D point cloud of the undamaged piece of baggage with a check-out 3D point cloud generated at the check-out from images of the piece of baggage that was damaged during transport.

The damage severity determination thereby may work similarly to the baggage identification method applied at the check-out described above. An example for such a damage severity determination algorithm is provided below: Capture a new image or a plurality of new images of the damaged piece of baggage at the check-out or wherever the damage severity determination occurs (e.g. already at the loading/unloading stage).

If the number of corner points extracted from a single new image is below a threshold, reject it and try with another image captured from another angle/altitude to obtain more corner points. If the number of extracted (corner) points is again too low add multiple images and extract (corner) points therefrom.

Generate a new (check-out) 3D point cloud from the image(s) of the damaged piece of baggage using SUSAN and ICP as described for the baggage identification and reconciliation above.

Compare the new point cloud with the check-in 3D point cloud for the given bag, in the following point cloud A stands for the check-in 3D point cloud (of the undamaged piece of baggage) and B stands for the newly recorded 3D point cloud (of the damaged piece of baggage) with outliers excluded.

Choose A as input cloud.

For each point in cloud B, find the nearest point in cloud A and compare (use tree search for quick results) to find the squared distance between those two points. Add the squared distances for each point in point cloud B and the respective nearest point in point cloud A to form an accumulated (squared) distance. If the distance between two points is within a max point threshold, continue. Else, this point in cloud B an outlier, skip this point in cloud B and continue.

Calculate the mean squared distance as

$$mean\ squared\ distance = \frac{accumulated\ distance}{number\ of\ points\ compared\ in\ point\ cloud\ B}$$

| If (mean squared distance > A cm ) | Example: Within 10% limit |
| baggage damage = x % | |
| If (mean squared distance > B cm ) | Example: Within 25% limit |
| baggage damage = y % | |
| If (mean squared distance > C cm ) | Example: Within 50% limit |
| baggage damage = z % | |

The passenger/insurance provider of the passenger/the airline may be notified about the determined severity of the damage.

An example for an insurance workflow is given in the following: First, a damage complaint may be raised by passenger, then the validity of the insurance claim is checked, the baggage may be subsequently examined by the insurance provider, the damage percentage may then be calculated by comparing the damaged baggage images (or point clouds) with the initial baggage images (or point clouds) - details of the point cloud comparison for damage percentage calculation were discussed above -, and finally an amount to be paid to the passenger is determined by the insurance company, for example, based on the determined damage percentage and the respective passenger's insurance coverage.

According to a second aspect, a computerized system of baggage identification and baggage reconciliation for public transport wherein a piece of baggage is associated with a passenger, is provided. The distributed computer system comprises at least one server, the at least one server comprises at least one processor and at least one non-volatile memory, wherein the computerized system is arranged to identify a passenger to be transported and passenger transport details and capture parameters of the piece of baggage associated with the passenger at a check-in, wherein the parameters form a virtual baggage identity. Capturing said parameters comprises capturing multiple images of the piece of baggage from multiple altitudes and angles and generating a check-in 3D point cloud corresponding to the piece of baggage on the basis of the multiple images captured, wherein generating said check-in 3D point cloud comprises extracting the position of corner points of the piece of baggage. The computerized system is further arranged to map the virtual baggage identity to the identified passenger and passenger transport details and to identify the passenger at the check-out destination and to identify the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing check-in 3D point clouds with the check-out 3D point cloud or point pattern, and deliver the piece of baggage identified at the check-out to the passenger identified at the check-out.

According to a third aspect, a computer program product is provided comprising program code instructions stored on a computer readable medium to execute the method steps according to the first aspect.

## BRIEF DESCRIPTION OF THE DRAWINGS

Examples of the invention are now described, also with reference to the accompanying drawings, wherein

Figs. 1A to 1C    illustrates a schematic block diagram of a detailed example of a baggage identification and reconciliation method,

Figs. 2A to 2C    illustrates a schematic block diagram of the general activities performed in an example of a baggage identification and reconciliation method,

Fig. 3    illustrates a schematic block diagram of an example of a generation of a check-in or check-out 3D point cloud or point pattern as applied in the methods illustrated by Figs. 1A to 1C and/or Figs. 2A to 2C,

Fig. 4    illustrates an example of a 3D point cloud representing a suitcase as created by the method schematically illustrated by Fig. 3.

Fig. 5    illustrates a schematic block diagram of an example of a comparison between a check-in 3D point cloud and a check-out 3D point cloud (see e.g. Fig. 4) or point pattern used for baggage identification and reconciliation in the methods illustrated by Figs. 1A to 1C and/or Figs. 2A to 2C,

Fig. 6    illustrates a schematic block diagram of an example damage severity determination as applied in the course of the baggage identification and reconciliation method illustrated by Figs. 1A to 1C and/or Figs. 2A to 2C,

Fig. 7    schematically illustrates activities carried out at the check-in in the course of the baggage identification and reconciliation method,

Fig. 8    schematically illustrates activities carried out at the transit in the course of the baggage identification and reconciliation method,

Fig. 9    schematically illustrates a check out system design according to which the method of baggage identification and reconciliation method is implemented,

Fig. 10    schematically illustrates a tree structure for segregating pieces of baggage into distinct categories in the course of the baggage identification and reconciliation method,

Fig. 11    schematically illustrates an example for the usage of a machine to for identifying a bag in the course of the method of baggage identification and reconciliation,

Fig. 12          schematically illustrates an example for using a ground handling for identifying a bag in the course of the method of baggage identification and reconciliation,

Fig. 13          schematically illustrates an example of using a passenger to identify a bag in the course of the method of baggage identification and reconciliation,

Fig. 14          schematically illustrates an example of a computerized system on which the methods illustrated by Figs. 1 to 6 are implemented.

The drawings and the description of the drawings are of examples of the invention and are not of the invention itself. Like reference signs refer to like elements throughout the following description of examples.

**DESCRIPTION OF EXAMPLES**

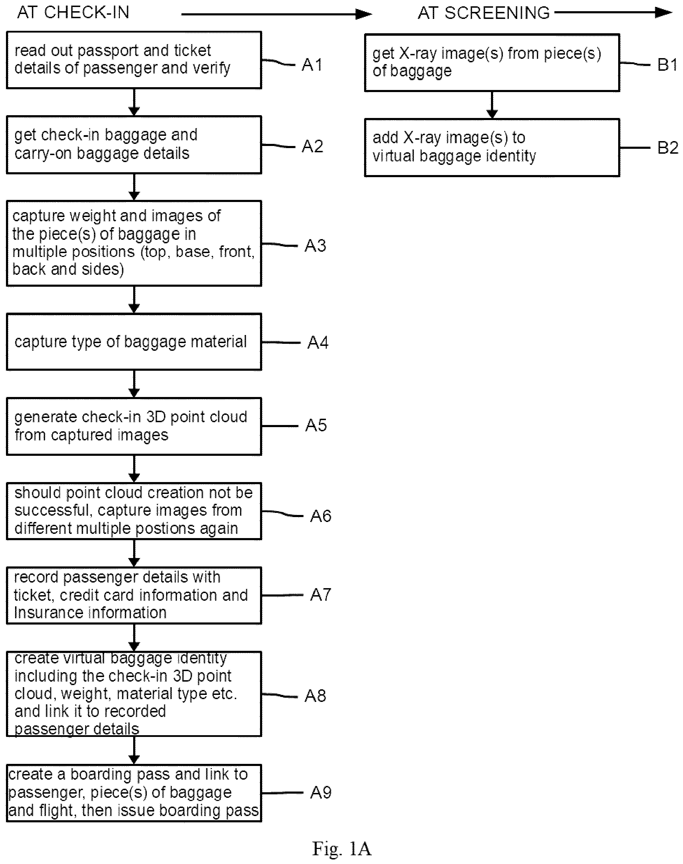

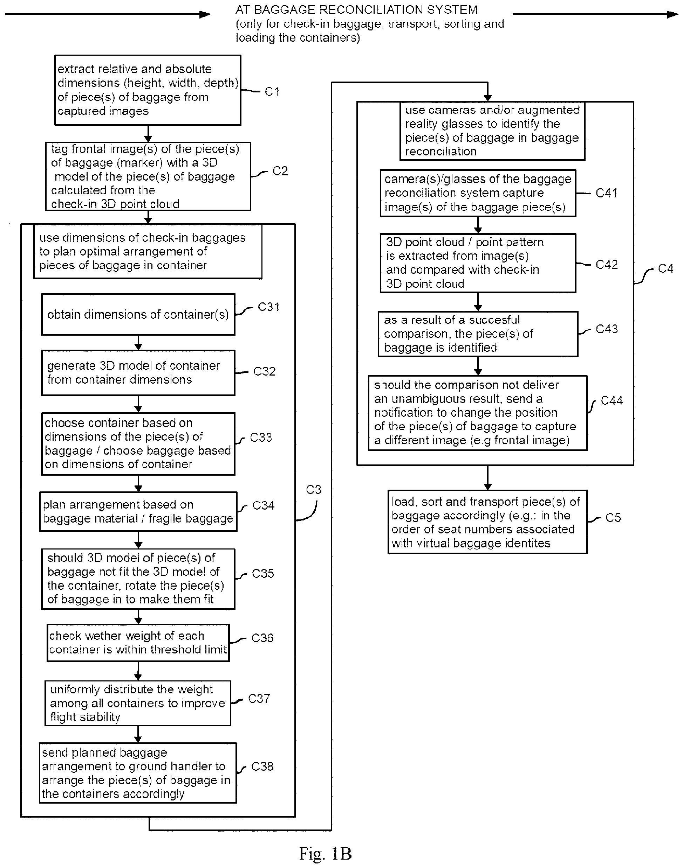

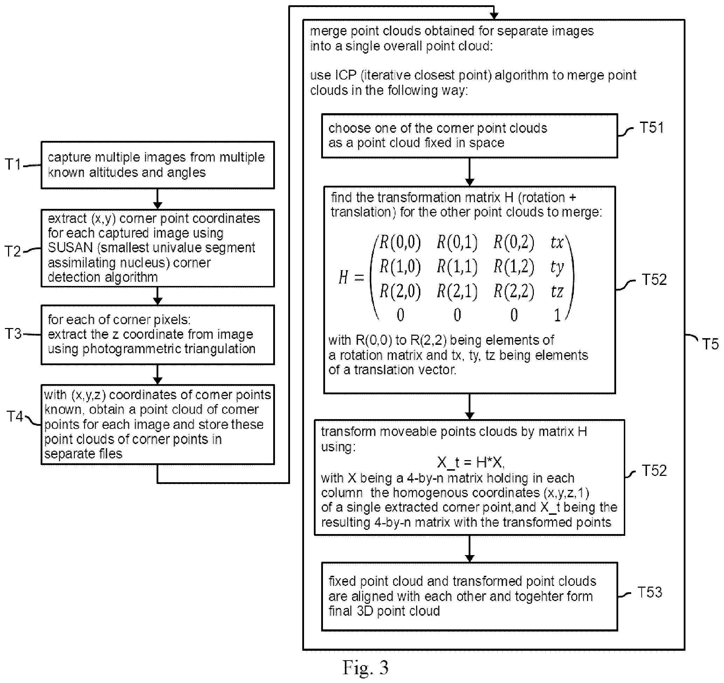

A schematic block diagram of a detailed example of a baggage identification and reconciliation method is illustrated by Figs. **1A to 1C.**
At the check-in, for example, the following activities are performed (see Fig. 1A):
In an activity A1, the passport and ticket details of a passenger are read out and verified. In an activity A2, the check-in baggage and carry-on baggage details are determined (it is determined which pieces of baggage is check-in baggage and which pieces of baggage is carry-on baggage). In an activity A3, the weight of the check-in pieces of baggage is determined and images of the piece(s) of baggage are taken from multiple positions (top base, front, back and sides) - also including different altitudes and angles. In activity A4, the type of baggage material (leather, synthetics etc.) is captured, for example, by user input. In an activity A5, a check-in 3D point cloud is generated from the captured image (see Fig. 3). In an optional activity A6, should the point cloud creation not be successful, again image from different multiple positions are captured. In an activity A8, a virtual baggage identity is created that includes the check-in 3D point cloud, the weight, material type and other features of the piece(s) of baggage. This virtual baggage identity is linked to the recorded passenger details. In an activity A9, a boarding pass is created and linked to the passenger, the piece(s) of baggage and the flight, then the boarding pass is issued.
At the screening station, for example, the following activities are performed (see Fig. 1A): In an activity B1, X-ray image(s) from the piece(s) of baggage at question are recorded. In an activity B2, these X-ray image(s) are added to the virtual baggage identity.
At the baggage reconciliation system, which is only applied for check-in baggage and involves the transport, the sorting of piece(s) of baggage and loading the containers, for example, the following activities are performed (see Fig. 1B):
In an activity C1, the relative and absolute dimensions (height, width, depth) of said piece(s) of baggage are extracted from the captured images. In activity C2, the frontal image(s) of the piece(s) of baggage are tagged as a marker with a 3D model of the piece(s) of baggage that is calculated on the basis of the check-in 3D point cloud. This 3D model creation and tagging activity C2, however, may also be missing.
In an activity C3 (involving activities C31 to C38), the dimensions of the check-in baggage are used to plan an optimal arrangement of pieces of baggage in a container:
To do so, in an activity C31, the dimensions of the container(s) are obtained. In an activity C32, a 3D model of the container is generated from the container dimensions. In an activity C33, a suitable container is chosen based on the dimension of the piece(s) of baggage and/or piece(s) of baggage are chosen based on the dimensions of the container. In an activity C34, the arrangement of the piece(s) of baggage in the container are planned based on the baggage material / on the basis on knowledge about whether the piece(s) of baggage hold fragile content or not. The arrangement may be chosen such that fragile piece(s) of baggage are placed on the top of a container. In an activity C35, the piece(s) of baggage may be rotated in planning the baggage arrangement, should the 3D model of the piece(s) of baggage / the 3D point cloud associated with the pieces of baggage, not fit the 3D model of the container. In an activity C36, it is checked whether the weight of each container is within a threshold limit. Should the container weight exceed a threshold, piece(s) of baggage may be removed from the container in the planning activity. In an activity C37, the weight of the piece(s) of baggage may be distributed uniformly among all the containers to improve flight stability. In an activity C38, the planned arrangement of the piece(s) of baggage may be sent to a ground handler to arrange the piece(s) of baggage in the containers accordingly.
In an activity C4 (involving C41 to C44), cameras and/or augmented reality glasses are used to identify the piece(s) of baggage within the baggage reconciliation system. In an activity C41, the camera(s), or augmented reality glasses used within the baggage reconciliation system capture image(s) of the piece(s) of baggage. In an activity C42, a 3D point cloud / point pattern is extracted from the captured image(s) and is compared with the check-in 3D point cloud. In activities C43/C44, as a result of a successful comparison, the piece of baggage is identified, should the comparison, however, deliver not an unambiguous result, a notification is sent to change the position of the piece(s) of baggage to capture a different image (e.g. frontal image).

In an activity C5, the piece(s) of baggage are loaded, sorted and transported accordingly. To provide an example, the piece(s) of baggage may be loaded, sorted and transported in the order of seat numbers associated with the virtual baggage identities (the seat numbers of passengers the virtual baggage identities are associated with).

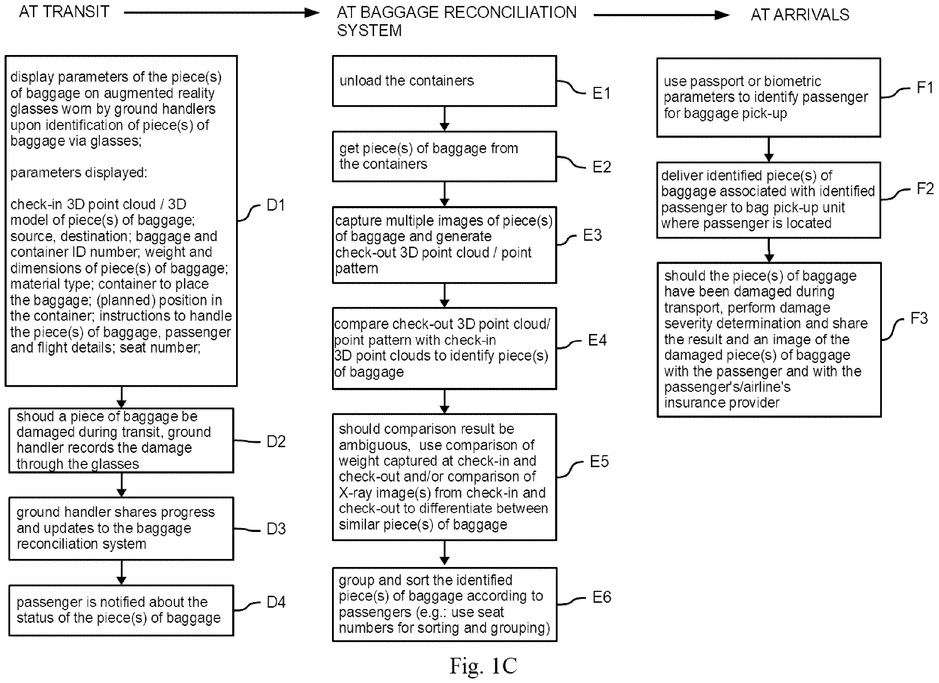

At transit, for example, the following activities D1 to D4, are performed (see Fig. 1C):

In an activity D1, the parameters of the piece(s) of baggage are displayed upon identification of piece(s) of baggage on augmented reality glasses worn by ground handlers, which were also used in identifying the piece(s) of baggage. The parameters displayed include at least one of: check-in 3D point cloud/3D model of piece(s) of baggage; the source and destination; baggage and container ID number, weight and dimensions of piece(s) of baggage, material type, container to place the baggage, the (planned) position in the container, instructions to handle the piece(s) of baggage, passenger and flight details as well as the seat number.

In an activity D2, should a piece of baggage be damaged during transit, the ground handler records the damage through the glasses. In an activity D3, the ground handler shares progress and update details about the baggage transport to the baggage reconciliation system and, correspondingly, in activity D4, the passenger is notified about the status of the piece(s) of baggage associated with the passenger.

At the baggage reconciliation system, for example, the following further activities E1 to E6 are carried out:

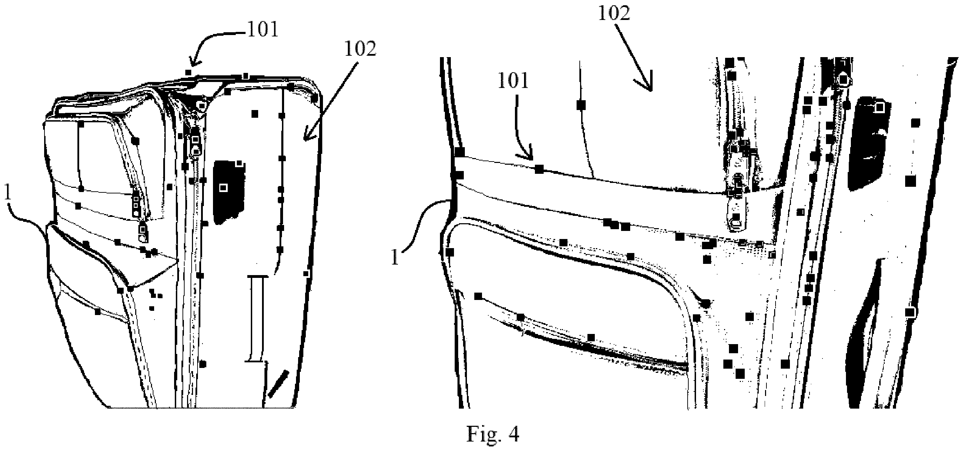

In an activity E1, the containers are unloaded, and in an activity E2, the piece(s) of baggage are retrieved from the containers. In an activity E3, again multiple images of the piece(s) of baggage are captured from different altitudes and angles and a check-out 3D point cloud or point pattern is generated from on the basis of these images. In an activity E4, the check-out 3D point cloud / point pattern previously generated is compared with check-in 3D point clouds to identify the piece(s) of baggage (see also Fig. 4). In activity E5, should the result of the comparison be ambiguous, further parameters captured at the check-in besides the check-in 3D point cloud like the weight or X-ray image(s) are used to differentiate between similar piece(s) of baggage. In an activity E6, the identified piece(s) of baggage are grouped and sorted according to the passengers. To provide an example, they are grouped and sorted according to the seat numbers of the passengers associated with the piece(s) of baggage.

At the arrivals, for example, the following activities F1 to F3 are carried out:

In an activity F1, a passport or biometric parameters (facial recognition, fingerprint scan etc.) are used to identify the passenger for baggage pick-up. In an activity F2, the identified piece(s) of baggage associated with the identified passenger are delivered to the bag pick-up unit where the passenger is located and has previously identified him/herself. In an activity F3, should the piece of baggage have been damaged during transport, a damage severity determination is performed on the piece(s) of baggage and the result is shared along with an image of the damaged piece(s) of baggage with the passenger and with the passenger's/airline's insurance provider.

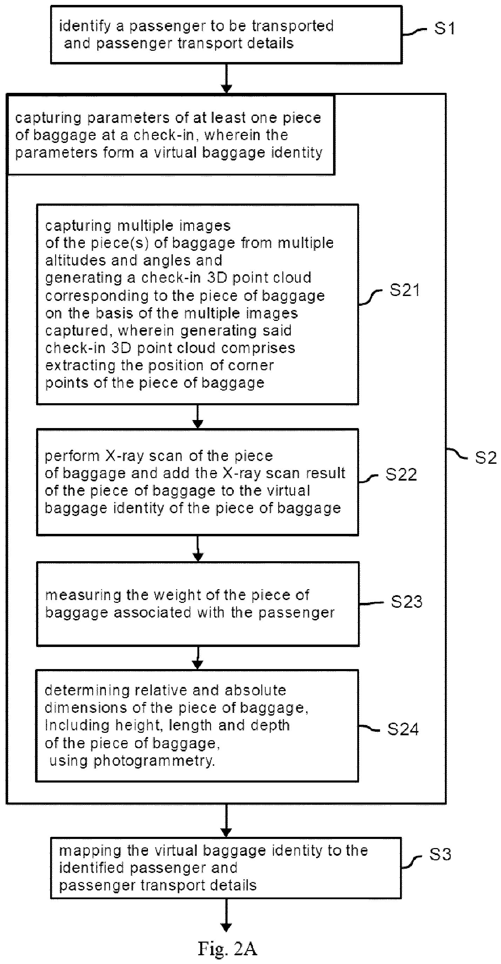

A schematic block diagram of the general activities performed in an example of a baggage identification and reconciliation method as described herein is given by **Figs. 2A to 2C.**

In an activity S1 (see Fig. 2A), the passenger to be transported and passenger transport details are identified.

In an activity S2 (including the activities S21 to S24), parameters of at least one piece of baggage are captured at the check-in, wherein these parameters form a virtual baggage identity. Capturing said parameters involves an activity S21, in which multiple images of the piece(s) of baggage are captured from multiple altitudes and angles and a 3D check-in point cloud is generated corresponding to the piece of baggage on the basis of the multiple images captured, wherein generating the 3D check-in point cloud comprises extracting the position of corner points of the piece of baggage. In a further activity S22, an X-ray scan of the piece of baggage is performed and the X-ray scan result is added to the virtual baggage identity. Capturing said parameters also includes measuring the weight of the piece of baggage associated with the passenger in an activity S23 as well as determining relative and absolute dimensions of the piece of baggage, including height, length and depth of the piece of baggage, using photogrammetry, in an activity S24. In a subsequent activity S3, the virtual baggage identity is mapped to the identified passenger and transport details.

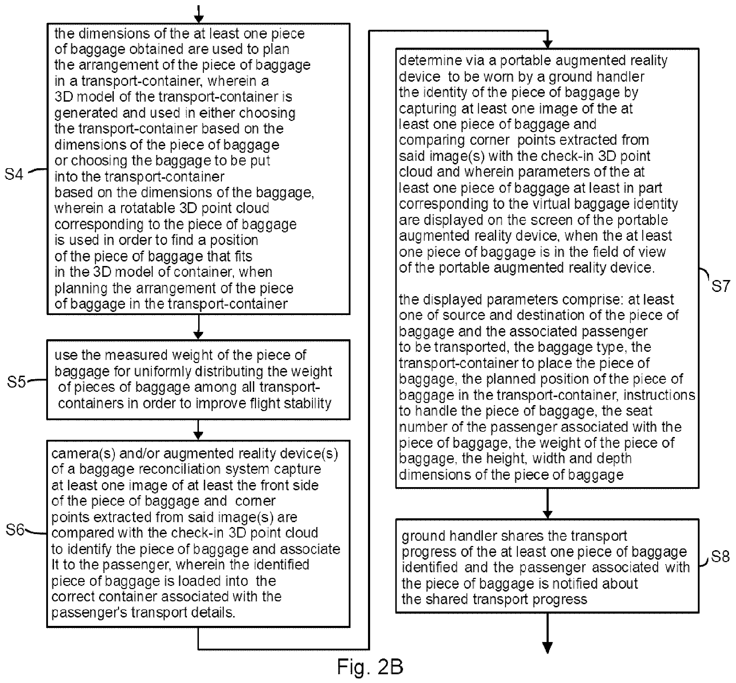

In an activity S4 (see Fig. 2B), the dimensions of the at least one piece of baggage obtained are used to plan the arrangement of the piece of baggage in a transport-container, wherein a 3D model of the transport-container is generated and used in either choosing the transport-container based on the dimensions of the piece of baggage or choosing the baggage to be put into the transport-container based on the dimensions of the baggage, wherein a rotatable 3D point cloud corresponding to the piece of baggage is used in order to find a position of the piece of baggage that fits in the 3D model of the container, when planning the arrangement of the piece of baggage in the transport-container.

In an activity S5, the measured weight of the piece of baggage is used in uniformly distributing the weight of pieces of baggage among all transport-containers in order to improve flight stability. In an activity S6, camera(s) and/or augmented reality device(s) of a baggage reconciliation system capture at least one image of at least the front side of the piece of baggage and corner points extracted from said image(s) are compared with the check-in 3D point cloud to identify the piece of baggage and associate it to the passenger, wherein the identified piece of baggage is loaded into the correct container associated with the passenger's transport details.

In an activity S7, it is determined via a portable augmented reality device to be worn by a ground handler the identity of the piece of baggage by capturing at least one image of the at least one piece of baggage and comparing corner points extracted from said image(s) with the check-in 3D point cloud and wherein parameters of the at least one piece of baggage at least in part corresponding to the virtual baggage identity are displayed on the screen of the portable augmented reality device, when the at least one piece of baggage is in the field of view of the portable augmented reality device. The displayed parameters comprise: at least one of source and destination of the piece of baggage and the associated passenger to be transported, the baggage type, the transport-container to place the piece of baggage, the planned position of the piece of baggage in the transport-container, instructions to handle the piece of baggage, the seat number of the passenger associated with the piece of baggage, the weight of the piece of baggage, the height, width and depth dimensions of the piece of baggage.

In an activity S8, the ground handler shares the transport progress of the at least one piece of baggage identified (with the baggage reconciliation system) and the passenger is notified about the shared transport progress.

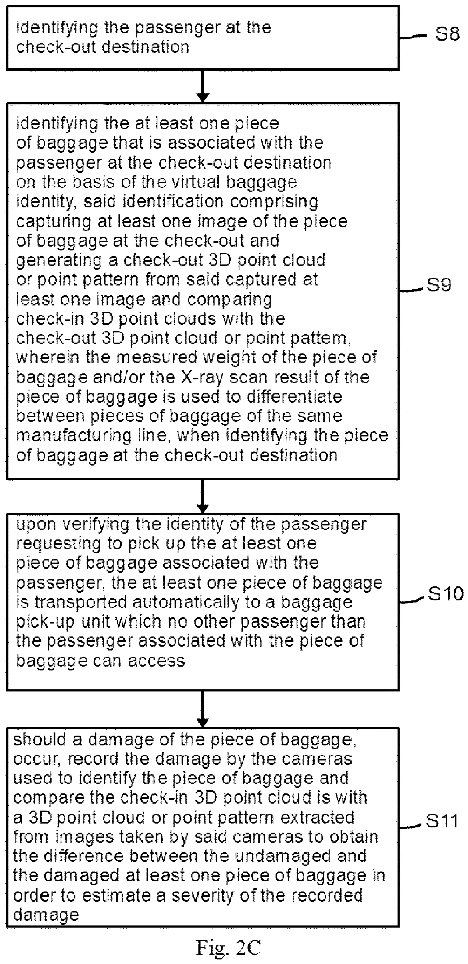

In an activity S9 (see Fig. 2C), the passenger is identified at the check-out destination. In an activity S9, the at least one piece of baggage is identified that is associated with the passenger at the check-out destination on the basis of the virtual baggage identity, said identification comprising capturing at least one image of the piece of baggage at the check-out and generating a check-out 3D point cloud or point pattern from said captured at least one image and comparing the check-in 3D point clouds with the check-out 3D point cloud or point pattern, wherein the measured weight of the piece of baggage and/or the X-ray scan result of the piece of baggage is used to differentiate between pieces of baggage of the same manufacturing line, when identifying the piece of baggage at the check-out destination.

In an activity S10, upon verifying the identity of the passenger requesting to pick up the at least one piece of baggage associated with the passenger, the at least one piece of baggage is transported automatically to a baggage pick-up unit which no other passenger than the passenger associated with the piece of baggage can access.

In an activity S11, should a damage of the piece of baggage occur, the damage is recorded by the cameras used to identify the piece of baggage and the check-in 3D point cloud is compared with a 3D point cloud or point pattern extracted from images taken by said cameras to obtain the difference between the undamaged and the damaged at least one piece of baggage in order to estimate a severity of the recorded damage.

A schematic block diagram of an example of a generation of a check-in or check-out 3D point cloud or point pattern as applied in the methods illustrated by Figs. 1A to 1C and/or Figs. 2A to 2C, is illustrated by **Fig. 3.**

The generation of said point clouds/point patterns takes place, for example, by performing the following activities T1 to T5:

In an activity T1, multiple images of the piece(s) of baggage are captured from multiple known altitudes and angles. In an activity T2, (x,y) corner point coordinates are extracted from each captured image using the SUSAN (smallest univalue segment assimilating nucleus) corner detection algorithm. In an activity T3, for each of the corner pixels (for which the (x,y) coordinates were identified), the z coordinate is extracted from the respective image using photogrammetric triangulation. In an activity T4, with the (x,y,z) coordinates of the corner points in each image known, a point cloud of corner points for each image is obtained and the respective point clouds of corner points are stored in separate files for each image. In an activity T5 (including activities T51 to T53), the point clouds created for the individual images are merged into a single overall cloud.

For this purpose, the ICP (iterative closest point) algorithm is used for the merge in the activities T51 to T53 as follows: In an activity T51, one of the corner point clouds from one particular image is chosen as a point cloud fixed in space. In an activity T52, the transformation matrix

$$H = \begin{pmatrix} R(0,0) & R(0,1) & R(0,2) & tx \\ R(1,0) & R(1,1) & R(1,2) & ty \\ R(2,0) & R(2,1) & R(2,2) & tz \\ 0 & 0 & 0 & 1 \end{pmatrix},$$

representing a rotation and translation is found for the other point clouds to merge to the point cloud chosen to be fixed in space, with R(0,0) to R(2,2) being elements of a rotation matrix and tx, ty, tz being elements of a translation vector. In an activity T52, the moveable point clouds are transformed by matrix H using:

$$X\_t = H*X,$$

with X being a 4-by-n matrix holding in each column the homogenous coordinates (x,y,z, 1) of a single extracted corner point, and X_t being the resulting 4-by-n matrix with the transformed points. Each moveable point cloud extracted from a single image may correspond to a different matrix X.

In activity T53 the fixed point cloud and such transformed (moveable) point clouds are aligned with each other so as to form the final 3D point cloud.

An example of such a 3D point cloud representing a suitcase as a piece of baggage 1 is illustrated by **Fig. 4.** Corner points extracted from a plurality of images form the points 101 of the 3D point cloud 102 which may serve either as a check-in 3D point cloud or a check-out 3D point cloud.

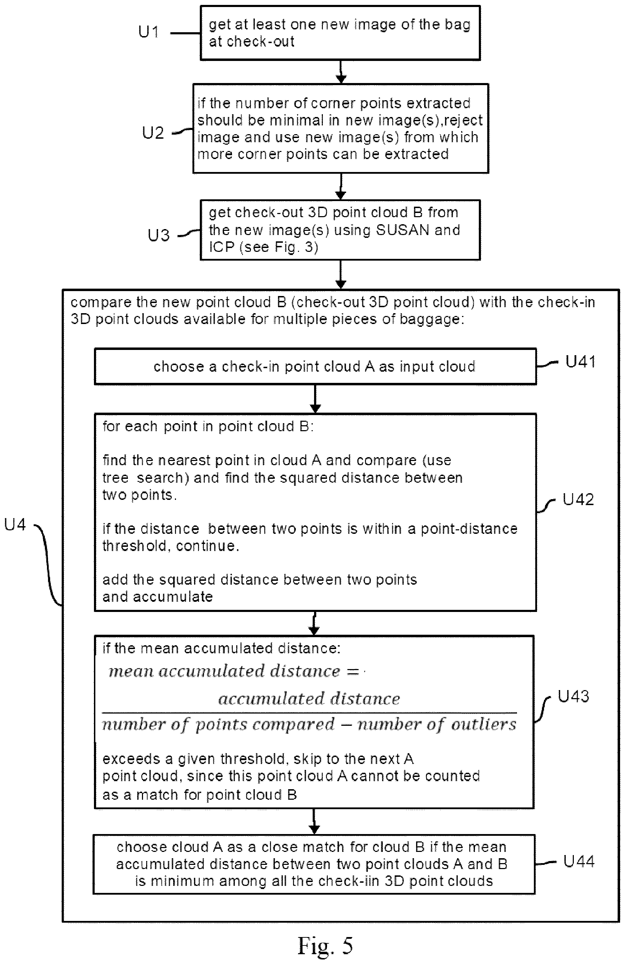

A schematic block diagram of an example of a comparison between a check-in 3D point cloud and a check-out 3D point cloud or point pattern used for baggage identification and reconciliation in the methods illustrated by Figs. 1A to 1C and/or Figs. 2A to 2C is given by **Fig. 5.**

The comparison is, for example, carried out by means of activities U1 to U4, as follows:

In an activity U1, at least one new image of the piece of baggage (bag) is captured at the check-out. In an activity U2, if the number of corner points that can be extracted from the new image is minimal, the image is rejected and new image(s) from which more corner points can be extracted is/are captured. In an activity U3, a check-out 3D point cloud is generated form the new image(s) using SUSAN and ICP (see Fig. 3). In an activity U4, the new point cloud B (being a check-out 3D point cloud) is compared with the check-in 3D point clouds available for multiple pieces of baggage by way of activities U41 to U44, which are explained further in the following:

In an activity U41, a check-in point cloud A is chosen as an input cloud. In an activity U42, for each point in point cloud B an activity of finding the nearest point in cloud A and comparing (using tree search) and finding the squared distance between two points is carried out. If the distance between the two points is within a point distance threshold, the method continues with these two points and the squared distance between two points is accumulated. As mentioned above, all distances between each point in cloud B and the respective nearest point in cloud A are accumulated, as long as said distances lie with a point distance threshold. In an activity U43, the mean accumulated distance is determined as

$$mean\ accumulated\ distance = \frac{accumulated\ distance}{number\ of\ points\ compared - number\ of\ outliers}$$

and if this mean accumulated distance is larger than a given threshold, the method skips to the next A point cloud (the current point cloud A is then not counted as a match). With the next point cloud A, the activities U42 and U43 are carried out again. This process continues until in an activity U44, the point cloud A for which the mean accumulated distance is minimum among all the check-in point clouds is chosen as a match.

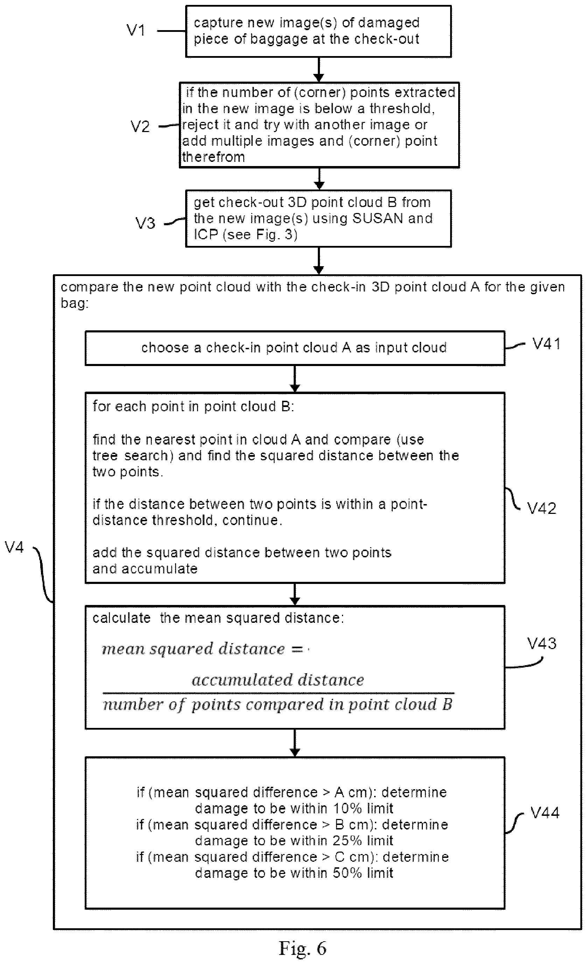

A schematic block diagram of an example damage severity determination as applied in the course of the baggage identification and reconciliation method illustrated by Figs. 1A to 1C and/or Figs. 2A to 2C is illustrated by **Fig. 6.**

The damage severity determination, for example, includes the activities V1 to V4, which are described in the following:

In an activity V1, new image(s) of a damaged piece of baggage is/are captured at the check-out. In an activity V2, should the number of (corner) points extracted of said new image(s) captured be below a threshold, these images are rejected and different images are captured or additional images are added and corner points are extracted from these new/additional images. In an activity V3, a check-out 3d point cloud B is obtained from the newly captured image(s) of the damaged piece of baggage using the SUSAN and ICP algorithm (see Fig. 3).

In an activity V4, which includes activities V41 to V44, the new point cloud (the check-out 3D point cloud of the damaged piece of baggage) is compared with the check-in point A of the given bag (the undamaged piece of baggage). To carry out this activity, in an activity V41, the check-in point cloud (of the undamaged piece of baggage) is chosen as the input cloud. In an activity V42, for each point in point cloud B, the method involves finding the nearest point in cloud A and compare (use tree search) and finding the squared distance between the two points. If the distance between two points is within a point-distance threshold, the method continues and the squared distance between two points is added to accumulate the squared distances between points. Thus, the squared distance between a given point in point cloud B and the respective nearest point in point cloud A is accumulated (for example: added). In this way, in an activity V43, the mean squared distance is calculated as:

$$mean\ squared\ distance = \frac{accumulated\ distance}{number\ of\ points\ compared\ in\ point\ cloud\ B}$$

wherein the accumulated distance, corresponds to a sum of squared distances between a point of point cloud B and the respective nearest point in point cloud A.

In an activity V44, if the mean squared distance is larger than A cm, the damage is determined to be within the 10% limit. If the mean squared distance is larger than B cm, the damage is determined to be within the 25% limit. If the mean squared distance is larger than C cm, the damage is determined to be within the 50% limit.

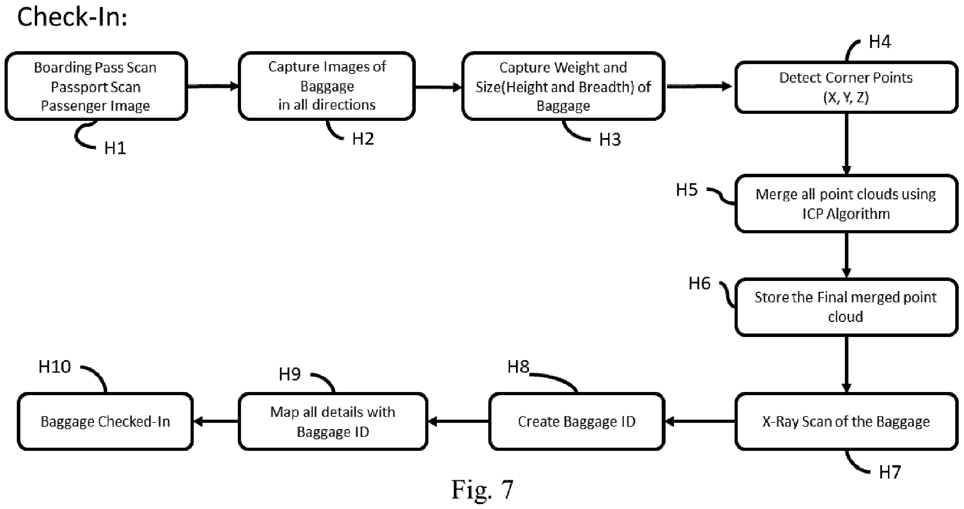

Activities carried out at the check-in in the course of the baggage identification and reconciliation method are schematically illustrated by Fig. **7.**

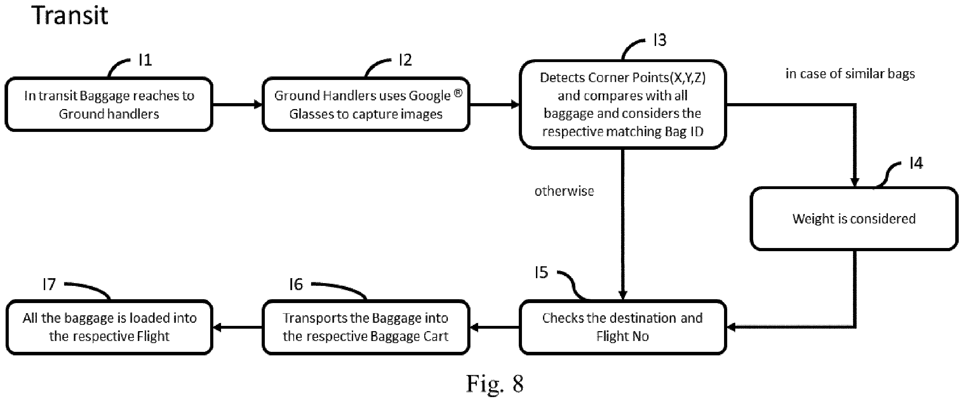

At check-in, the following activities may be performed: In an activity H1, a boarding pass scan and/or a passport scan, and/or a passenger image scan is performed. In an activity H2, images of the baggage are captured in all directions as described above. In an activity H3, the weight and size (height and breadth) of the at least one piece of baggage are captured. In an activity H4 the corner point coordinates (X,Y,Z) are detected (forming singular point clouds) based on the images captured in activity H2. In an activity H5, all point clouds are merged using an ICP algorithm. In an activity H6, the final merged point cloud is stored. In an activity H7, an X-Ray scan of the piece(s) of baggage is performed. In an activity H8, a baggage ID is created. In an activity H9, all details (flight number, seat number, passenger identity, baggage type etc.) are mapped with a baggage ID. In an activity H10, the piece of baggage is finally checked in. Activities carried out at the transit in the course of the baggage identification and reconciliation method, are schematically illustrated by Fig. **8.**

At transit, according to this implementation example, the following activities are performed: In an activity I1, the baggage reaches the ground handlers. In an activity 12, the ground handlers use Google® Glasses to capture images. In an activity 13, the ground handler detects corner points (X,Y,Z) corresponding to a point cloud and compares them with all pieces of baggage and considers the respective matching Bag ID. If no single bag clearly shows the highest matching percentage, the weight of the bag is considered as an additional matching factor in an activity 14. If a matching piece of baggage can be found immediately, the ground handler checks the destination and flight number of the detected and matched piece of baggage in an activity 15. The ground handler transports the respective piece of baggage in a respective baggage cart in an activity I6 and the piece of baggage is loaded into the respective flight in an activity 17.

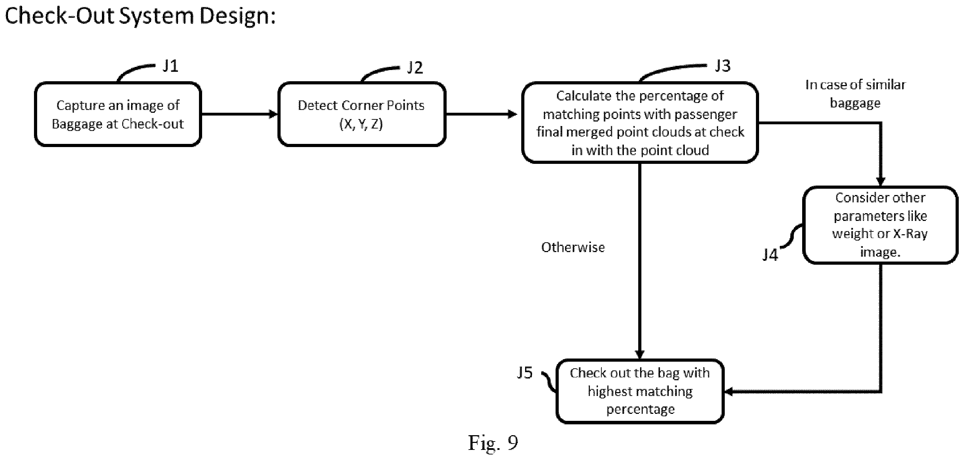

An example of a check out system design, according to which the method of baggage identification and reconciliation method is implemented, is illustrated by Fig. **9.**

In an activity J1, an image of the piece of baggage is captured at the check-out. In an activity J2, corner point coordinates (X,Y,Z) are detected. In an activity J3, the percentage of matching points between the passenger associated points clouds merged at the check and the point cloud obtained for the piece of baggage at the check-out is calculated. In case of similar baggage - corresponding to pieces of baggage with a similar matching percentage, e.g. +/- 10% of a given threshold percentage like 90%, based on the point cloud comparison - other parameters like weight or the X-ray image of a piece of baggage are considered in an activity J4. If there are no similar pieces of baggage based on cloud comparison, the piece of baggage with the highest matching percentage is checked out in an activity J5.

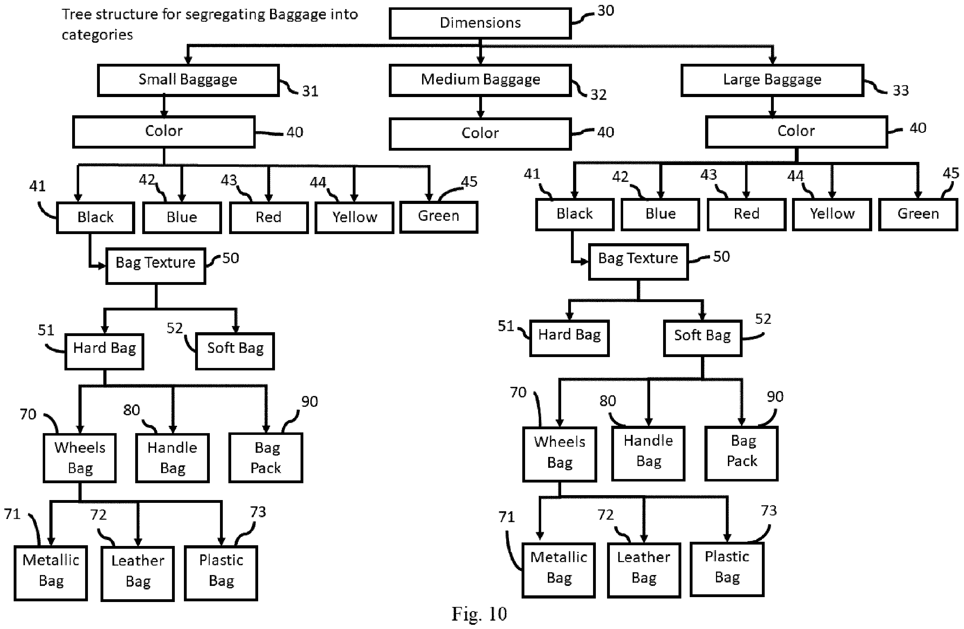

An example of a tree structure for segregating pieces of baggage into distinct categories in the course of the baggage identification and reconciliation method is schematically illustrated by Fig. **10.**

This example of a tree structure is used, for example, to provide to provide an additional way for differentiating bags with similar point clouds from each other. All the following segregations may be determined automatically based on the images taken from the piece of baggage. The tree structure includes dimensions 30, which segregate the baggage in one of the categories small baggage 31, medium baggage 32, or large baggage 33.

Further distinctions are described as examples for a small baggage 31 and a large baggage 33 in the following. The small baggage 31 as well as the large baggage are next segregated according to their colour. In particular, the bags colour is differentiated between black 41, blue, 42, red 43, yellow 44 and green 45 colour classes.

In the illustrated example, the both the small baggage 31 and the large baggage 33 are classified as pieces of baggage with black 41 colour. The pieces of baggage 31, 33 are further differentiated according to their bag texture 50, which in particular differentiates between a hard bag 51 and a soft bag 52. In the described example, the piece of baggage classified as small baggage 31 is classified as a hard bag 51, whereas the piece of baggage classified as a large baggage 33 is classified as a soft bag 52.

A further distinction is then made then between a wheels bag 70, a handle bag 80, and a bag pack 90 type piece of baggage. Both the piece of baggage classified as small baggage 31 and the piece of baggage classified as large baggage 33 are classified as wheels bag 70. In the class wheels bag 70 it is further differentiated between a metallic bag 71, a leather bag 72 and a plastic bag 73.

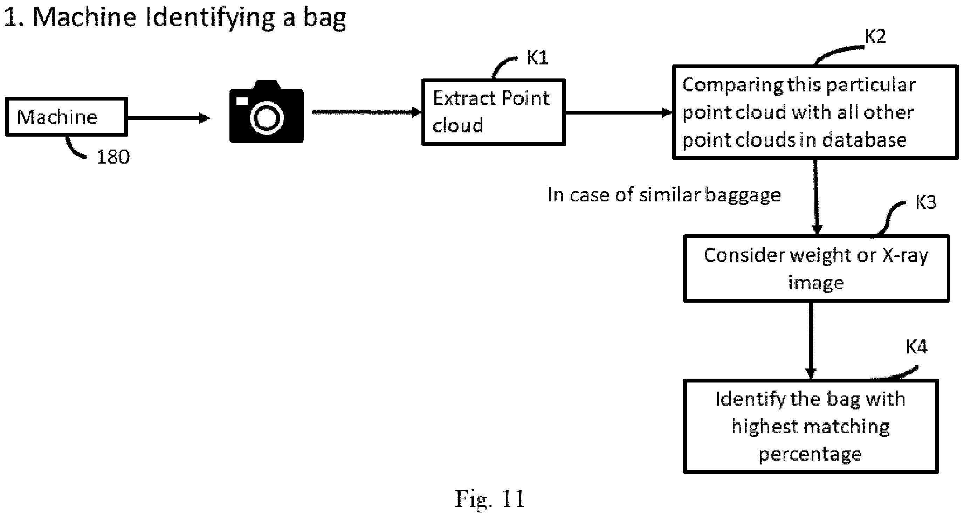

An example for the usage of a machine to for identifying a bag in the course of the method of baggage identification and reconciliation, is schematically illustrated by Fig. **11.**

A machine (such as a height adjustable and rotatable array of cameras) is used to extract the point cloud in an activity K1. The extracted point cloud is compared with all other point clouds (of checked-in pieces of baggage) in a database in an activity K2. In case of similar baggage, the weight or X-ray image is considered in an activity K3. In an activity K4, the piece of baggage with the highest matching percentage is identified.

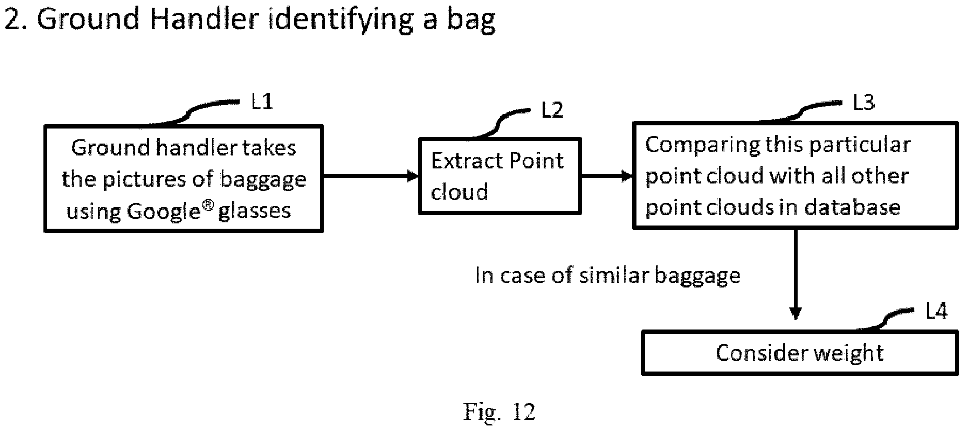

An example for using a ground handling for identifying a bag in the course of the method of baggage identification and reconciliation is illustrated by Fig. **12.**

The ground handler takes pictures from a piece of baggage using Google® glasses in an activity L1. The point cloud/point pattern is extracted in an activity L2. This particular point cloud is compared with all other point clouds in a database in an activity L3. In case of similar baggage, the weight of the considered particular piece of baggage is considered in an activity L4.

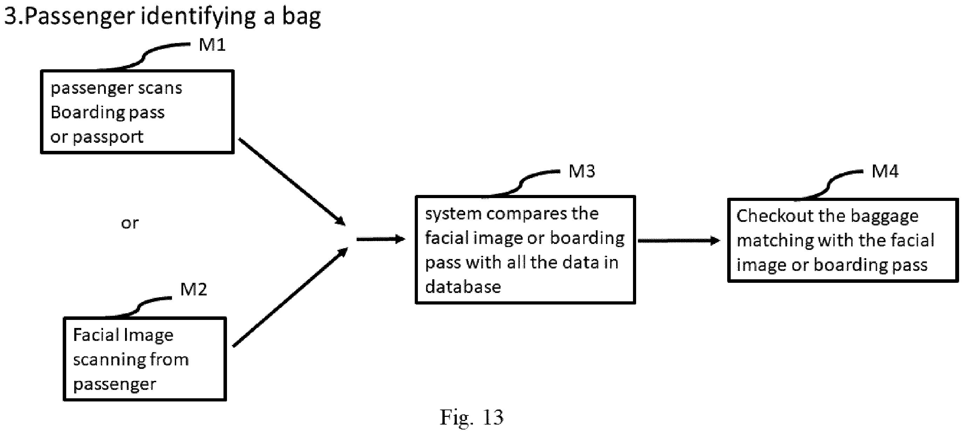

An example of using a passenger to identify a bag in the course of the method of baggage identification and reconciliation is schematically illustrated by Fig. **13.**

The passenger scans the boarding pass or passport in an activity M1 or a facial image scan is taken from the passenger in an activity M2. In an activity M3, the system compares the facial image or boarding pass with all (passenger) data in a database. In an activity M4, the piece of baggage matching with the facial image of the passenger or the passenger's boarding pass is checked out.

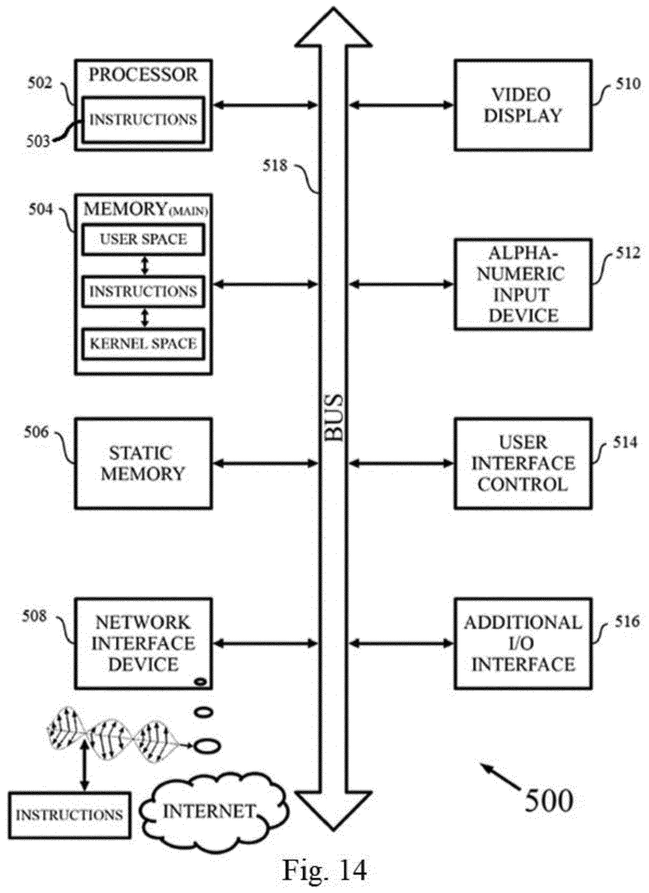

A diagrammatic representation of an exemplary computer system 500 is shown in **Fig. 14.** The processor 502 is arranged to execute a set of instructions 503, to cause the computer system 500 to perform any of the methodologies used for the method of baggage identification and baggage reconciliation for public transport, as described herein. The computers of the distributed computer system performing the tasks of said method of baggage identification and baggage reconciliation for public transport might be arranged like this.

The computer system 500 includes a processor 502, a main memory 504 and a network interface 508. The main memory 504 includes a user space, which is associated with user-run applications, and a kernel space, which is reserved for operating-system- and hardware-associated applications. The computer system 500 further includes a static memory 506, e.g. non-removable flash and/or solid-state drive and/or a removable Micro or Mini SD card, which permanently stores software enabling the computer system 500 to execute functions of the computer system 500. Furthermore, it may include a video display 510, a user interface control module 514 and/or an alpha-numeric and cursor input device 512. Optionally, additional I/O interfaces 516, such as card reader and USB interfaces may be present. The computer system components 502 to 516 are interconnected by a data bus 518.

In some exemplary embodiments the software programmed to carry out (parts of) the method described herein is stored on the static memory 506; in other exemplary embodiments, external databases are used.

An executable set of instructions (i.e. software) 503 embodying any one, or all, of the methodologies described above, resides completely, or at least partially, permanently in the non-volatile memory 506. When being executed, process data resides in the main memory 504 and/or the processor 502.

**Claims**

1. A method of baggage identification and baggage reconciliation for public transport, wherein a piece of baggage is associated with a passenger, the method comprising:

   identifying a passenger to be transported and passenger transport details,
   capturing parameters of at least one piece of baggage at a check-in, wherein the parameters form a virtual baggage identity, wherein capturing said parameters comprises capturing multiple images of the piece of baggage from multiple altitudes and angles and generating a check-in 3D point cloud corresponding to the piece of baggage on the basis of the multiple images captured, wherein generating said check-in 3D point cloud comprises extracting the position of corner points of the piece of baggage,
   mapping the virtual baggage identity to the identified passenger and passenger transport details,
   identifying the passenger at the check-out destination,
   identifying the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing check-in 3D point clouds with the check-out 3D point cloud or point pattern,
   delivering the piece of baggage identified at the check-out to the passenger identified at the check-out.

2. The method of claim 1, wherein capturing the parameters at the check-in comprises an X-ray scan of the piece of baggage and wherein the virtual baggage identity comprises also an X-ray scan result of the piece of baggage and wherein capturing the parameters at the check-in further comprises measuring the weight of the piece of baggage associated with the passenger, and wherein the measured weight of the piece baggage and/or the X-ray scan result of the piece of baggage is used to differentiate between pieces of baggage of the same manufacturing line, when identifying the piece of baggage at the check-out destination.

3. The method of claims 1 or 2, wherein capturing the parameters at the check-in comprises determining relative and absolute dimensions of the at least one piece of baggage, including height, length and depth of the piece of baggage, using photogrammetry.

4. The method of claim 3, wherein the dimensions of the at least one piece of baggage obtained are used to plan the arrangement of the piece of baggage in a transport-container, wherein a 3D model of the transport-container is generated and used in either choosing the transport-container based on the dimensions of the piece of baggage or choosing the baggage to be put into the transport-container based on the dimensions of the baggage.

5. The method of claim 4, wherein a rotatable 3D point cloud corresponding to the piece of baggage is used in order to find a position of the piece of baggage that fits in the 3D model of container, when planning the arrangement of the piece of baggage in the transport-container.

6. The method of any one of claims 2 to 5, wherein the measured weight of the piece of baggage is used in uniformly distributing the weight of pieces of baggage among all transport-containers in order to improve flight stability.

7. The method of any one of claims 2 to 6, wherein a camera and/or an augmented reality device of a baggage reconciliation system captures at least one image of at least the front side of the piece of baggage and the corner points extracted from said at least one image are compared with the check-in 3D point cloud to identify the piece of baggage and associate it to the passenger.

8. The method of any one of claims 1 to 7, wherein a portable augmented reality device is provided for a ground handler, wherein the portable augmented reality device determines the identity of the piece of baggage by capturing at least one image of the at least one piece of baggage and comparing corner points extracted from said at least one image with the 3D point cloud captured at the check-in and wherein parameters of the at least one piece of baggage at least in part corresponding to the virtual baggage identity are displayed on the screen of the portable augmented reality device, when the at least one piece of baggage is in the field of view of the portable augmented reality device.

9. The method of claim 8, wherein the parameters displayed on the portable augmented reality device comprise at least one of source and destination of the piece of baggage and the associated passenger to be transported, the baggage type, the transport-container to place the piece of baggage, the planned position of the piece of baggage in the transport-container, instructions to handle the piece of baggage, the seat number of the passenger associated with the piece of baggage, the weight of the piece of baggage, the height, width and depth dimensions of the of the piece of baggage.

10. The method of any one of claims 1 to 9, wherein at the check-out, upon verifying the identity of the passenger requesting to pick up the at least one piece of baggage associated with the passenger, the at least one piece of baggage associated with the passenger is transported automatically to a baggage pick-up unit which no other passenger than the passenger associated with the piece of baggage can access.

11. The method of any one of claims 1 to 10, wherein the ground handler shares the transport progress of the at least one piece of baggage identified and the passenger associated with the piece of baggage is notified about the shared transport progress.

12. The method of any one of claims 1 to 11, wherein a damage of the piece of baggage is recorded by cameras that identify the baggage, and wherein the check-in 3D point cloud is compared with a 3D point cloud or point pattern extracted from images taken by said cameras to obtain the difference between the undamaged and the damaged at least one piece of baggage in order to estimate a severity of the recorded damage.

13. A computerized system of baggage identification and baggage reconciliation for public transport, wherein a piece of baggage is associated with a passenger, the computerized system comprising at least one processor and at least one non-volatile memory, wherein the computerized system is arranged to:

identify a passenger to be transported and passenger transport details,
capture parameters of at least one piece of baggage at a check-in, wherein the parameters form a virtual baggage identity, wherein capturing said parameters comprises capturing multiple images of the piece of baggage from multiple altitudes and angles and generating a check-in 3D point cloud corresponding to the piece of baggage on the basis of the multiple images captured, wherein generating said check-in 3D point cloud comprises extracting the position of corner points of the piece of baggage,
map the virtual baggage identity to the identified passenger and passenger transport details,
identify the passenger at the check-out destination,
identify the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing the check-in 3D point clouds with the check-out 3D point cloud or point pattern, delivering the piece of baggage identified at the check-out to the passenger identified at the check-out.

14. The computerized system of claim 13, wherein the computerized system is further arranged to carry out the activities as defined by claims 2 to 12.

15. A computer program product comprising program code instructions stored on a computer readable medium to execute the method steps according to claims 1 to 12, when said program is executed on a computer device.

AT CHECK-IN ————————————————▶    AT SCREENING ————————————————▶

| | |
|---|---|
| read out passport and ticket details of passenger and verify — A1 | get X-ray image(s) from piece(s) of baggage — B1 |
| get check-in baggage and carry-on baggage details — A2 | add X-ray image(s) to virtual baggage identity — B2 |
| capture weight and images of the piece(s) of baggage in multiple positions (top, base, front, back and sides) — A3 | |
| capture type of baggage material — A4 | |
| generate check-in 3D point cloud from captured images — A5 | |
| should point cloud creation not be successful, capture images from different multiple postions again — A6 | |
| record passenger details with ticket, credit card information and Insurance information — A7 | |
| create virtual baggage identity including the check-in 3D point cloud, weight, material type etc. and link it to recorded passenger details — A8 | |
| create a boarding pass and link to passenger, piece(s) of baggage and flight, then issue boarding pass — A9 | |

Fig. 1A

AT BAGGAGE RECONCILIATION SYSTEM
(only for check-in baggage, transport, sorting and
loading the containers)

extract relative and absolute
dimensions (height, width, depth)
of piece(s) of baggage from
captured images — C1

tag frontal image(s) of the piece(s)
of baggage (marker) with a 3D
model of the piece(s) of baggage
calculated from the
check-in 3D point cloud — C2

use dimensions of check-in baggages
to plan optimal arrangement of
pieces of baggage in container

obtain dimensions of container(s) — C31

generate 3D model of container
from container dimensions — C32

choose container based on
dimensions of the piece(s) of
baggage / choose baggage based
on dimensions of container — C33

plan arrangement based on
baggage material / fragile baggage — C34

should 3D model of piece(s) of
baggage not fit the 3D model of
the container, rotate the piece(s)
of baggage in to make them fit — C35

check wether weight of each
container is within threshold limit — C36

uniformly distribute the weight
among all containers to improve
flight stability — C37

send planned baggage
arrangement to ground handler to
arrange the piece(s) of baggage in
the containers accordingly — C38

C3

use cameras and/or augmented
reality glasses to identify the
piece(s) of baggage in baggage
reconciliation

camera(s)/glasses of the baggage
reconciliation system capture
image(s) of the baggage piece(s) — C41

3D point cloud / point pattern
is extracted from image(s)
and compared with check-in
3D point cloud — C42

as a result of a succesful
comparison, the piece(s) of
baggage is identified — C43

should the comparison not deliver
an unambiguous result, send a
notification to change the position
of the piece(s) of baggage to capture
a different image (e.g frontal image) — C44

C4

load, sort and transport piece(s) of
baggage accordingly (e.g.: in the
order of seat numbers associated
with virtual baggage identites — C5

Fig. 1B

AT TRANSIT ──────────────▶ AT BAGGAGE RECONCILIATION ──────────────▶ AT ARRIVALS
                                                    SYSTEM

| | | |
|---|---|---|
| display parameters of the piece(s) of baggage on augmented reality glasses worn by ground handlers upon identification of piece(s) of baggage via glasses;<br><br>parameters displayed:<br><br>check-in 3D point cloud / 3D model of piece(s) of baggage; source, destination; baggage and container ID number; weight and dimensions of piece(s) of baggage; material type; container to place the baggage; (planned) position in the container; instructions to handle the piece(s) of baggage, passenger and flight details; seat number; — D1 | unload the containers ⎬ E1 | use passport or biometric parameters to identify passenger for baggage pick-up ⎬ F1 |

get piece(s) of baggage from the containers ⎬ E2

deliver identified piece(s) of baggage associated with identified passenger to bag pick-up unit where passenger is located ⎬ F2

capture multiple images of piece(s) of baggage and generate check-out 3D point cloud / point pattern ⎬ E3

should a piece of baggage be damaged during transit, ground handler records the damage through the glasses — D2

compare check-out 3D point cloud/ point pattern with check-in 3D point clouds to identify piece(s) of baggage ⎬ E4

should the piece(s) of baggage have been damaged during transport, perform damage severity determination and share the result and an image of the damaged piece(s) of baggage with the passenger and with the passenger's/airline's insurance provider ⎬ F3

ground handler shares progress and updates to the baggage reconciliation system — D3

should comparison result be ambiguous, use comparison of weight captured at check-in and check-out and/or comparison of X-ray image(s) from check-in and check-out to differentiate between similar piece(s) of baggage ⎬ E5

passenger is notified about the status of the piece(s) of baggage — D4

group and sort the identified piece(s) of baggage according to passengers (e.g.: use seat numbers for sorting and grouping) ⎬ E6

Fig. 1C

identify a passenger to be transported and passenger transport details — S1

capturing parameters of at least one piece of baggage at a check-in, wherein the parameters form a virtual baggage identity

capturing multiple images of the piece(s) of baggage from multiple altitudes and angles and generating a check-in 3D point cloud corresponding to the piece of baggage on the basis of the multiple images captured, wherein generating said check-in 3D point cloud comprises extracting the position of corner points of the piece of baggage — S21

perform X-ray scan of the piece of baggage and add the X-ray scan result of the piece of baggage to the virtual baggage identity of the piece of baggage — S22

measuring the weight of the piece of baggage associated with the passenger — S23

determining relative and absolute dimensions of the piece of baggage, Including height, length and depth of the piece of baggage, using photogrammetry. — S24

— S2

mapping the virtual baggage identity to the identified passenger and passenger transport details — S3

Fig. 2A

the dimensions of the at least one piece of baggage obtained are used to plan the arrangement of the piece of baggage in a transport-container, wherein a 3D model of the transport-container is generated and used in either choosing the transport-container based on the dimensions of the piece of baggage or choosing the baggage to be put into the transport-container based on the dimensions of the baggage, wherein a rotatable 3D point cloud corresponding to the piece of baggage is used in order to find a position of the piece of baggage that fits in the 3D model of container, when planning the arrangement of the piece of baggage in the transport-container

S4

use the measured weight of the piece of baggage for uniformly distributing the weight of pieces of baggage among all transport-containers in order to improve flight stability

S5

camera(s) and/or augmented reality device(s) of a baggage reconciliation system capture at least one image of at least the front side of the piece of baggage and corner points extracted from said image(s) are compared with the check-in 3D point cloud to identify the piece of baggage and associate It to the passenger, wherein the identified piece of baggage is loaded into the correct container associated with the passenger's transport details.

S6

determine via a portable augmented reality device to be worn by a ground handler the identity of the piece of baggage by capturing at least one image of the at least one piece of baggage and comparing corner points extracted from said image(s) with the check-in 3D point cloud and wherein parameters of the at least one piece of baggage at least in part corresponding to the virtual baggage identity are displayed on the screen of the portable augmented reality device, when the at least one piece of baggage is in the field of view of the portable augmented reality device.

the displayed parameters comprise: at least one of source and destination of the piece of baggage and the associated passenger to be transported, the baggage type, the transport-container to place the piece of baggage, the planned position of the piece of baggage in the transport-container, instructions to handle the piece of baggage, the seat number of the passenger associated with the piece of baggage, the weight of the piece of baggage, the height, width and depth dimensions of the piece of baggage

S7

ground handler shares the transport progress of the at least one piece of baggage identified and the passenger associated with the piece of baggage is notified about the shared transport progress

S8

Fig. 2B

identifying the passenger at the check-out destination — S8

identifying the at least one piece of baggage that is associated with the passenger at the check-out destination on the basis of the virtual baggage identity, said identification comprising capturing at least one image of the piece of baggage at the check-out and generating a check-out 3D point cloud or point pattern from said captured at least one image and comparing check-in 3D point clouds with the check-out 3D point cloud or point pattern, wherein the measured weight of the piece of baggage and/or the X-ray scan result of the piece of baggage is used to differentiate between pieces of baggage of the same manufacturing line, when identifying the piece of baggage at the check-out destination — S9

upon verifying the identity of the passenger requesting to pick up the at least one piece of baggage associated with the passenger, the at least one piece of baggage is transported automatically to a baggage pick-up unit which no other passenger than the passenger associated with the piece of baggage can access — S10

should a damage of the piece of baggage, occur, record the damage by the cameras used to identify the piece of baggage and compare the check-in 3D point cloud is with a 3D point cloud or point pattern extracted from images taken by said cameras to obtain the difference between the undamaged and the damaged at least one piece of baggage in order to estimate a severity of the recorded damage — S11

Fig. 2C

T1 — capture multiple images from multiple known altitudes and angles

T2 — extract (x,y) corner point coordinates for each captured image using SUSAN (smallest univalue segment assimilating nucleus) corner detection algorithm

T3 — for each of corner pixels: extract the z coordinate from image using photogrammetric triangulation

T4 — with (x,y,z) coordinates of corner points known, obtain a point cloud of corner points for each image and store these point clouds of corner points in separate files

T5 — merge point clouds obtained for separate images into a single overall point cloud:

use ICP (iterative closest point) algorithm to merge point clouds in the following way:

T51 — choose one of the corner point clouds as a point cloud fixed in space

T52 — find the transformation matrix H (rotation + translation) for the other point clouds to merge:

$$H = \begin{pmatrix} R(0,0) & R(0,1) & R(0,2) & tx \\ R(1,0) & R(1,1) & R(1,2) & ty \\ R(2,0) & R(2,1) & R(2,2) & tz \\ 0 & 0 & 0 & 1 \end{pmatrix}$$

with R(0,0) to R(2,2) being elements of a rotation matrix and tx, ty, tz being elements of a translation vector.

T52 — transform moveable points clouds by matrix H using:
$$X\_t = H*X,$$
with X being a 4-by-n matrix holding in each column the homogenous coordinates (x,y,z,1) of a single extracted corner point, and X_t being the resulting 4-by-n matrix with the transformed points

T53 — fixed point cloud and transformed point clouds are aligned with each other and togehter form final 3D point cloud

Fig. 3

Fig. 4

U1 —— get at least one new image of the bag at check-out

U2 —— if the number of corner points extracted should be minimal in new image(s),reject image and use new image(s) from which more corner points can be extracted

U3 —— get check-out 3D point cloud B from the new image(s) using SUSAN and ICP (see Fig. 3)

compare the new point cloud B (check-out 3D point cloud) with the check-in 3D point clouds available for multiple pieces of baggage:

choose a check-in point cloud A as input cloud —— U41

for each point in point cloud B:

find the nearest point in cloud A and compare (use tree search) and find the squared distance between two points.

if the distance between two points is within a point-distance threshold, continue.

add the squared distance between two points and accumulate

U42

U4

if the mean accumulated distance:

$$mean\ accumulated\ distance = \frac{accumulated\ distance}{number\ of\ points\ compared - number\ of\ outliers}$$

exceeds a given threshold, skip to the next A point cloud, since this point cloud A cannot be counted as a match for point cloud B

U43

choose cloud A as a close match for cloud B if the mean accumulated distance between two point clouds A and B is minimum among all the check-iin 3D point clouds —— U44

Fig. 5

V1 — capture new image(s) of damaged piece of baggage at the check-out

V2 — if the number of (corner) points extracted in the new image is below a threshold, reject it and try with another image or add multiple images and (corner) point therefrom

V3 — get check-out 3D point cloud B from the new image(s) using SUSAN and ICP (see Fig. 3)

compare the new point cloud with the check-in 3D point cloud A for the given bag:

V41 — choose a check-in point cloud A as input cloud

V4 —

V42 — for each point in point cloud B:

find the nearest point in cloud A and compare (use tree search) and find the squared distance between the two points.

if the distance between two points is within a point-distance threshold, continue.

add the squared distance between two points and accumulate

V43 — calculate the mean squared distance:

$$mean\ squared\ distance = \frac{accumulated\ distance}{number\ of\ points\ compared\ in\ point\ cloud\ B}$$

V44 — if (mean squared difference > A cm): determine damage to be within 10% limit
if (mean squared difference > B cm): determine damage to be within 25% limit
if (mean squared difference > C cm): determine damage to be within 50% limit

Fig. 6

# Check-In:

Fig. 7

EP 4 303 794 A1

# Transit

Fig. 8

# Check-Out System Design:

Fig. 9

EP 4 303 794 A1

Tree structure for segregating Baggage into categories

Fig. 10

# 1. Machine Identifying a bag

Machine — 180

K1 Extract Point cloud

K2 Comparing this particular point cloud with all other point clouds in database

In case of similar baggage

K3 Consider weight or X-ray image

K4 Identify the bag with highest matching percentage

Fig. 11

## 2. Ground Handler identifying a bag

Fig. 12

EP 4 303 794 A1

## 3.Passenger identifying a bag

M1

passenger scans
Boarding pass
or passport

or

M2

Facial Image
scanning from
passenger

M3

system compares the
facial image or boarding
pass with all the data in
database

M4

Checkout the baggage
matching with the facial
image or boarding pass

Fig. 13

EP 4 303 794 A1

Fig. 14

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | EP 3 270 342 A1 (ALITHEON INC [US])<br>17 January 2018 (2018-01-17)<br>* paragraph [0016] *<br>* paragraph [0024] *<br>* paragraph [0077] *<br>* paragraphs [0083] – [0086] *<br>* paragraph [0093] *<br>* paragraphs [0107] – [0108] *<br>* paragraph [0136] – paragraph [0137] *<br>* figures 9A, 9C * | 1,3-6,<br>13,15<br>2,12<br>7-11,14 | INV.<br>G06Q10/08<br>B64F1/36 |
| Y | CN 114 663 626 A (SUPER NODE INNOVATION SCIENCE AND TECH SHENZHEN LIMITED COMPANY) 24 June 2022 (2022-06-24)<br>* the whole document * | 12 | |
| Y | GB 2 588 408 A (INT CONSOLIDATED AIRLINES GROUP S A [ES]) 28 April 2021 (2021-04-28)<br>* paragraph [0075] * | 2 | |
| A | EP 3 656 683 A1 (INT BOARDING SOLUTIONS S L [ES]) 27 May 2020 (2020-05-27)<br>* paragraphs [0022], [0036] – [0044] * | 1,13,15 | **TECHNICAL FIELDS SEARCHED (IPC)**<br><br>G06Q<br>B64F |
| A | WO 2021/078790 A1 (INT CONSOLIDATED AIRLINES GROUP S A [ES])<br>29 April 2021 (2021-04-29)<br>* the whole document * | 1,13,15 | G07C |
| A | EP 2 168 873 A2 (SIEMENS AG [DE])<br>31 March 2010 (2010-03-31)<br>* paragraph [0042] * | 1,13,15 | |
| A | CN 109 102 227 A (TIANJIN HANGDA AVIATION EQUIPMENT CO LTD)<br>28 December 2018 (2018-12-28)<br>* the whole document * | 1,13,15 | |

-/--

The present search report has been drawn up for all claims

| Place of search | Date of completion of the search | Examiner |
|---|---|---|
| Munich | 12 December 2022 | Weber, Ingo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EUROPEAN SEARCH REPORT

**Application Number**

EP 22 30 6030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 158 658 A (BARCLAY JOHN L [US]) 12 December 2000 (2000-12-12) * the whole document * ----- | 1,13,15 | |
| A | EP 3 113 091 A1 (AMADEUS SAS [FR]) 4 January 2017 (2017-01-04) * paragraphs [0009], [0014], [0029], [0038] * ----- | 1,13,15 | |
| A | EP 3 373 252 A1 (SIST TECNICOS Y MONTAJES S L [ES]) 12 September 2018 (2018-09-12) * paragraph [0031] * * paragraph [0039] * ----- | 1,13,15 | |
| A | GB 2 588 407 A (INT CONSOL AIRLINES GROUP SA) 28 April 2021 (2021-04-28) * paragraph [0007] * ----- | 1,13,15 | |
| X | CN 113 418 467 A (XIAMEN GUIGU KINETIC ENERGY INFORMATION TECH CO LTD) 21 September 2021 (2021-09-21) * the whole document * ----- | 1,13,15 | **TECHNICAL FIELDS SEARCHED** (IPC) |

The present search report has been drawn up for all claims

| Place of search | Date of completion of the search | Examiner |
|---|---|---|
| Munich | 12 December 2022 | Weber, Ingo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 303 794 A1

## ANNEX TO THE EUROPEAN SEARCH REPORT
## ON EUROPEAN PATENT APPLICATION NO.

EP 22 30 6030

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2022

| Patent document cited in search report | | Publication date | Patent family member(s) | | Publication date |
|---|---|---|---|---|---|
| EP 3270342 | A1 | 17-01-2018 | EP | 3270342 A1 | 17-01-2018 |
| | | | US | 2018018627 A1 | 18-01-2018 |
| CN 114663626 | A | 24-06-2022 | NONE | | |
| GB 2588408 | A | 28-04-2021 | NONE | | |
| EP 3656683 | A1 | 27-05-2020 | EP | 3656683 A1 | 27-05-2020 |
| | | | WO | 2020104517 A1 | 28-05-2020 |
| WO 2021078790 | A1 | 29-04-2021 | CN | 114556296 A | 27-05-2022 |
| | | | EP | 4049208 A1 | 31-08-2022 |
| | | | WO | 2021078790 A1 | 29-04-2021 |
| EP 2168873 | A2 | 31-03-2010 | CN | 101683898 A | 31-03-2010 |
| | | | DE | 102008048741 A1 | 08-04-2010 |
| | | | EP | 2168873 A2 | 31-03-2010 |
| | | | US | 2010076796 A1 | 25-03-2010 |
| CN 109102227 | A | 28-12-2018 | NONE | | |
| US 6158658 | A | 12-12-2000 | NONE | | |
| EP 3113091 | A1 | 04-01-2017 | NONE | | |
| EP 3373252 | A1 | 12-09-2018 | AU | 2016347760 A1 | 14-06-2018 |
| | | | BR | 112018009229 A2 | 19-03-2019 |
| | | | CA | 3006923 A1 | 11-05-2017 |
| | | | CN | 108463841 A | 28-08-2018 |
| | | | CO | 2018005172 A2 | 10-10-2018 |
| | | | EP | 3373252 A1 | 12-09-2018 |
| | | | ES | 2562733 A1 | 07-03-2016 |
| | | | JP | 2019500710 A | 10-01-2019 |
| | | | KR | 20180099648 A | 05-09-2018 |
| | | | US | 2018322483 A1 | 08-11-2018 |
| | | | WO | 2017077167 A1 | 11-05-2017 |
| GB 2588407 | A | 28-04-2021 | NONE | | |
| CN 113418467 | A | 21-09-2021 | NONE | | |

EPO FORM P0459

For more details about this annex : see Official Journal of the European Patent Office, No. 12/82